# EUROPEAN PATENT APPLICATION

(11) **EP 4 847 994 A1**
(43) Date of publication of application: **02.12.2026**
(21) Application number: 24926682.6
(22) Date of filing: 30.08.2024
(51) Int. Cl.: G03B 5/00, G03B 5/02, G03B 13/36, G03B 30/00, G02B 7/09, H02K 33/18, F03G 7/06

(54) **CAMERA DRIVING MOTOR, CAMERA MODULE AND ELECTRONIC DEVICE**

(30) Priority: 26.02.2024 CN 202410218072; 29.03.2024 CN 202410385522
(71) Applicant: HUAWEI TECHNOLOGIES CO., LTD., Shenzhen, Guangdong 518129 (CN)
(72) Inventor: LIU, Zichen, Shenzhen, Guangdong 518129 (CN); WAN, Haibo, Shenzhen, Guangdong 518129 (CN); LI, Zhangcheng, Shenzhen, Guangdong 518129 (CN); SUN, Zhanli, Shenzhen, Guangdong 518129 (CN); ZHAO, Cong, Shenzhen, Guangdong 518129 (CN)
(74) Representative: Huawei European IPR
(86) International application number: PCT/CN2024/116096
(87) International publication number: WO 2025/179815

(57) **Abstract**

This application provides a camera driving motor, a camera module, and an electronic device, and relates to the field of electronic device camera technologies. The camera driving motor includes: a base, a seat body, and a carrier, where the seat body is located on the base, the seat body has an accommodating cavity, and the carrier is located in the accommodating cavity. The camera driving motor further includes an image stabilization driving structure, where the image stabilization driving structure drives the seat body, the carrier, and a lens to move along a plane perpendicular to an optical axis of the lens, the image stabilization driving structure includes a plurality of groups of driving units, and the plurality of groups of driving units are arranged around a circumferential direction of the base. Each group of the driving units includes a movable claw and a fixed claw, and an SMA wire connecting the movable claw and the fixed claw. The camera driving motor further includes a plurality of balls disposed between the seat body and the base. The driving structure is an SMA driving structure. The SMA driving structure has a simple structure and a small footprint, so that a volume of the camera driving motor can be reduced, thereby implementing miniaturization of the camera module. The plurality of balls help reduce a friction coefficient during movement of the seat body.

## Description

This application claims priorities to Chinese Patent Application No. 202410218072.7, filed with the China National Intellectual Property Administration on February 26, 2024 and entitled "CAMERA DRIVING MOTOR, CAMERA MODULE, AND ELECTRONIC DEVICE", and to Chinese Patent Application No. 202410385522.1, filed with the China National Intellectual Property Administration on March 29, 2024 and entitled "CAMERA DRIVING MOTOR, CAMERA MODULE, AND ELECTRONIC DEVICE", both of which are incorporated herein by reference in their entireties.

### TECHNICAL FIELD

This application relates to the field of electronic device camera technologies, and in particular, to a camera driving motor, a camera module having the camera driving motor, and an electronic device including the camera module.

### BACKGROUND

In some electronic devices having a camera function, a driving motor is integrated into a camera module. The driving motor is configured to drive a lens to move so as to implement automatic focusing (automatic focusing, AF) and/or optical image stabilization (optical image stabilization, OIS), thereby ensuring imaging clarity of the electronic device.

With increasing requirements for product miniaturization and imaging design, reducing the size of a camera driving motor and improving imaging quality is a technical problem that currently needs to be addressed.

### SUMMARY

This application provides a camera driving motor, a camera module having the camera driving motor, and an electronic device including the camera module. An SMA-wire-driven motor is introduced into the camera driving motor, thereby implementing optical image stabilization. The SMA-wire-driven motor has a simple structure and a small footprint, thereby enabling miniaturization of the camera driving motor. In addition, disposing a plurality of balls can reduce a friction coefficient during movement of the seat body, thereby improving imaging quality.

To achieve the foregoing objectives, the following technical solutions are used in embodiments of this application.

According to an aspect, this application provides a camera driving motor. For example, the camera driving motor may be applied to an electronic device having a photographing function and a video recording function.

The camera driving motor includes: a base, a seat body, and a carrier, where the seat body is located on the base, the seat body has an accommodating cavity, the carrier is located in the accommodating cavity, and the carrier is configured to mount a lens. The camera driving motor further includes an image stabilization driving structure, where the image stabilization driving structure is connected to the base and the seat body, the image stabilization driving structure drives the seat body, the carrier, and the lens to move along a plane perpendicular to an optical axis of the lens, the image stabilization driving structure includes a plurality of groups of driving units, and the plurality of groups of driving units are arranged around a circumferential direction of the base. Each group of the driving units includes a movable claw and a fixed claw, and an SMA wire connecting the movable claw and the fixed claw, where the movable claw is fastened on the seat body, and the fixed claw is fastened on the base.

The image stabilization driving structure for implementing optical image stabilization of the camera driving motor that is provided in this application includes the movable claw, the fixed claw, and the SMA wire that is connected between the fixed claw and the movable claw. In other words, the driving structure is an SMA driving structure. The SMA driving structure has a simple structure and a small footprint, so that a volume of the camera driving motor can be reduced, thereby implementing miniaturization of the camera module.

In addition, the camera driving motor further includes a plurality of balls, where the plurality of balls are located between the seat body and the base, and when the image stabilization driving structure drives the seat body, the carrier, and the lens to move along the plane perpendicular to the optical axis of the lens, the seat body slides along the plurality of balls.

Using the plurality of balls disposed between the seat body and the base can reduce a friction coefficient between the seat body and the base, thereby improving image shooting quality.

In a feasible implementation, the plurality of balls include a first group of balls, a second group of balls, and a third group of balls, any one of the first group of balls, the second group of balls, and the third group of balls includes the plurality of balls, and the first group of balls, the second group of balls, and the third group of balls are arranged at intervals along the circumferential direction of the base.

A connection line among the first group of balls, the second group of balls, and the third group of balls is in a shape of a triangle. In this way, on the basis that a friction coefficient during movement of the seat body is reduced, using stability of the triangle can further improve movement stability of the seat body.

In a feasible implementation, a groove is disposed between the seat body and the base, and the plurality of balls are disposed in the groove.

For example, the groove may be disposed on a surface that is of the seat body and that faces the base, and the plurality of balls are disposed in the groove.

In a feasible implementation, each group of the driving units includes one movable claw, one fixed claw, and one SMA wire. One SMA wire is connected between one movable claw and one fixed claw. Along the circumferential direction of the base, the movable claws of two adjacent groups of the driving units are disposed close to each other and connected, and the fixed claws of two adjacent groups of the driving units are disposed close to each other and separated.

In some structures, the movable claws of two adjacent groups of the driving units may be integrally formed structural members.

In a feasible implementation, the fixed claw is located on a lower surface of the base, the movable claw is located on a lower surface of the seat body, and an extension direction of the SMA wire is parallel to an extension direction of a side edge of the base.

In a feasible implementation, the image stabilization driving structure includes four groups of driving units, so that the driving structure is a four-wire SMA driving structure.

In a feasible implementation, the camera driving motor further includes a magnetic attraction structure, where the magnetic attraction structure is disposed between the base and the seat body, and when the image stabilization driving structure drives the seat body to slide along the plurality of balls, the magnetic attraction structure generates a magnetic attraction force between the base and the seat body.

The magnetic attraction structure is disposed between the base and the carrier. In this case, when the seat body moves relative to the base, a risk that the seat body tilts under gravity of the seat body itself is reduced under an action of the magnetic attraction force of the magnetic attraction structure.

In a feasible implementation, the magnetic attraction structure includes a magnet and a magnetic attraction sheet, where one of the magnet and the magnetic attraction sheet is disposed on the base, and the other is disposed on the seat body.

For example, a mounting groove may be disposed on the base, and the magnet is disposed in the mounting groove. This can reduce a thickness dimension of the entire camera driving motor.

In a feasible implementation, the plurality of balls include a plurality of groups of balls, where the plurality of groups of balls are arranged at intervals along the circumferential direction of the base, and the magnetic attraction structure is disposed between two adjacent groups of the balls.

In a feasible implementation, the camera driving motor further includes a focusing driving structure, a first elastic member, and a first slide bar. The first elastic member is configured to provide an elastic force for the carrier and the lens to move from a first position to a second position. The direction from the first position to the second position is parallel to the optical axis of the lens. The first position is closer to the seat body than the second position. The focusing driving structure drives the carrier and the lens to move between the second position and a third position along the optical axis of the lens. The second position is located between the first position and the third position. An axial direction of the first slide bar is parallel to an optical axis direction of the lens, and the first slide bar is disposed between the seat body and the carrier. When the carrier and the lens move between the first position and the third position, the carrier slides along the axial direction of the first slide bar.

A stroke of the carrier carrying the lens includes a focusing stroke between the second position and the third position, and further includes a reset stroke of the elastic member between the first position and the second position, that is, the carrier carrying the lens moves between the first position and the third position. Compared with the focusing stroke only between the second position and the third position, the lens in this application has a larger stroke.

In addition, the camera driving motor in this application further includes the first slide bar. The axial direction of the first slide bar is consistent with the optical axis direction of the lens. The first slide bar is fastened relative to the seat body, and the carrier is connected to the first slide bar in a sliding manner. When the carrier and the lens move between the first position and the third position, the carrier slides along the axial direction of the first slide bar.

Because the carrier is in sliding fit with the first slide bar, the carrier carrying the lens may slide along the first slide bar. In this case, even if the stroke of the carrier and the lens is relatively large, or a driving force for driving the carrier and the lens to move is relatively large, movement stability of the lens and the carrier is relatively high, and a risk that the carrier and the lens deviate from the optical axis is reduced.

In a feasible implementation, when the first elastic member is located below the seat body, and the carrier and the lens are located at the first position, the carrier is in contact with the first elastic member, and the first elastic member deforms to generate an elastic force pointing from the first position to the second position.

The first elastic member is located below the seat body. When the carrier and the lens are at the first position, the elastic member is squeezed, so that the elastic member generates the elastic force.

In a feasible implementation, when the carrier and the lens move between the second position and the third position, the carrier is separated from the first elastic member.

In other words, when the focusing driving structure drives the carrier and the lens to move along the optical axis of the lens to implement automatic focusing, the elastic member does not generate an elastic force on the carrier and the lens.

In a feasible implementation, the first elastic member includes a first lug and a second lug, and an elastic segment that is connected between the first lug and the second lug. Both the first lug and the second lug are fastened on the seat body, and the elastic segment extends to a position below the carrier. When the carrier and the lens are located at the first position, the carrier is in contact with the elastic segment, and the elastic segment deforms to generate an elastic force pointing from the first position to the second position.

In a feasible implementation, the camera driving motor further includes an attraction structure, where the attraction structure is configured to generate an attraction force with the first slide bar. When the carrier and the lens move along the optical axis of the lens, the carrier slides along the axial direction of the first slide bar under attraction of the attraction force.

When the carrier carrying the lens moves relative to the seat body along the optical axis direction of the lens, to enable the carrier to stably slide along the slide bar, in this implementation, the attraction structure is disposed, where the attraction structure may generate the attraction force with the slide bar. Under an action of the attraction force, the carrier slides along the slide bar.

In a feasible implementation, the attraction structure includes a magnet, where the magnet is fastened on the carrier and disposed close to the first slide bar, and an attraction force is generated between the magnet and the first slide bar.

When the carrier carrying the lens moves relative to the seat body along the optical axis direction of the lens, to enable the carrier to stably slide along the slide bar, in this embodiment of this application, the magnet is disposed, so that the attraction force (which may be referred to as a clamping force) is generated between the magnet and the slide bar, thereby enabling the carrier to clamp the slide bar and slide stably along the slide bar in a movement process. This improves movement stability.

In a feasible implementation, the focusing driving structure includes a first magnet and a first coil that faces the first magnet, where one of the first magnet and the first coil is disposed on the carrier, and the other is disposed on the seat body. The first slide bar and the magnet are disposed on a side of the first magnet, and the magnet is closer to the first slide bar than the first magnet.

Electromagnetic induction is generated between the coil and the magnet in the focusing driving structure, and a magnetic attraction force may be generated between the slide bar and the magnet. To reduce impact between the electromagnetic induction and the magnetic attraction force, in an example of this application, the magnet in the attraction structure is closer to the slide bar than a focusing driving unit.

In a feasible implementation, the focusing driving structure includes the first magnet and the first coil that faces the first magnet, and includes a second magnet and a second coil that faces the second magnet, where the first magnet and the second magnet are symmetrically disposed with respect to the optical axis of the lens. The camera driving motor further includes a second slide bar. The first slide bar is disposed on a side of the first magnet, the second slide bar is disposed on a side of the second magnet, and the first slide bar and the second slide bar are symmetrically disposed with respect to the optical axis of the lens.

In a feasible implementation, the carrier has an abutting surface in sliding fit with the first slide bar, and when the carrier slides along the axial direction of the first slide bar, the first slide bar is in contact with the abutting surface.

The carrier can stably slide along the slide bar through contact between the slide bar and the abutting surface.

In a feasible implementation, the camera driving motor further includes a position detection structure, where the position detection structure is configured to detect a position at which the carrier slides relative to the first slide bar.

Using the position detection structure to detect the position at which the carrier slides can determine a focusing position.

In a feasible implementation, the position detection structure includes an electromagnetic transducer and a magnet, where the magnet in the position detection structure is shared with the first magnet in the focusing driving structure. This can reduce a quantity of structural members.

In a feasible implementation, the camera driving motor further includes an electrical connection structure. A variable aperture, the focusing driving structure, and the image stabilization driving structure in the camera module are all electrically connected to a circuit board of the camera driving motor through the electrical connection structure.

In a feasible implementation, the electrical connection structure includes: a first spring arm, a second conductive lead, and a ground lead. A part of the first spring arm is connected to the base, and the other part of the first spring arm is connected to the seat body. The fixed claw is electrically connected to the circuit board of the camera driving motor through the second conductive lead, and the first spring arm is electrically connected to the circuit board of the camera driving motor through the ground lead.

In a feasible implementation, the electrical connection structure includes: a second spring arm, a first conductive lead, and a flexible printed circuit. A part of the second spring arm is electrically connected to the variable aperture. The flexible printed circuit is configured to electrically connect to the circuit board of the camera driving motor, and the other part of the second spring arm is electrically connected to the flexible printed circuit through the first conductive lead. The focusing driving structure is electrically connected to the flexible printed circuit through the first conductive lead.

In this example, the variable aperture in the camera module can be electrically connected to the circuit board through the second spring arm, the first conductive lead, and the flexible printed circuit.

In a feasible implementation, the seat body includes a main body portion and an extension portion. The extension portion is disposed on a side that is of the main body portion and that is close to the base, and the extension portion extends along a circumferential direction of an outer edge of the main body portion in a direction away from the main body portion. The accommodating cavity runs through the main body portion and the extension portion. There is a gap between the extension portion and the base, and the plurality of balls are disposed in the gap.

In this way, there is some space on a periphery of the main body portion, and another structural member in the camera module can be disposed by using the space.

According to another aspect, this application further provides a camera driving motor.

The camera driving motor includes: a base, a seat body, and a carrier, where the seat body is located on the base, the seat body has an accommodating cavity, the carrier is located in the accommodating cavity, and the carrier is configured to mount a lens. The camera driving motor further includes an elastic member, a focusing driving structure, and a slide bar. The elastic member is configured to provide an elastic force for the carrier and the lens to move from a first position to a second position, where a direction from the first position to the second position is parallel to an optical axis of the lens, and the first position is closer to the seat body than the second position. The focusing driving structure is configured to drive the carrier and the lens to move between the second position and a third position along the optical axis of the lens, where the second position is between the first position and the third position.

A stroke of the carrier carrying the lens includes a focusing stroke between the second position and the third position, and further includes a reset stroke of the elastic member between the first position and the second position, that is, the carrier carrying the lens moves between the first position and the third position. Compared with the focusing stroke only between the second position and the third position, the lens in this application has a larger stroke.

In addition, the camera driving motor in this application further includes the slide bar. An axial direction of the slide bar is parallel to an optical axis direction of the lens, and the slide bar is disposed between the seat body and the carrier. When the carrier and the lens move between the first position and the third position, the carrier slides along the axial direction of the slide bar.

Because the carrier is in sliding fit with the slide bar, the carrier carrying the lens may slide along the slide bar. In this case, even if the stroke of the carrier and the lens is relatively large, or a driving force for driving the carrier and the lens to move is relatively large, movement stability of the lens and the carrier is relatively high, and a risk that the carrier and the lens deviate from the optical axis is reduced.

In a feasible implementation, when the elastic member is located below the seat body, and the carrier and the lens are located at the first position, the carrier is in contact with the elastic member, and the elastic member deforms to generate an elastic force pointing from the first position to the second position.

When the elastic member is located below the seat body, and the carrier and the lens are at the first position, the elastic member is squeezed, so that the elastic member generates the elastic force.

In a feasible implementation, when the carrier and the lens move between the second position and the third position, the carrier is separated from the elastic member.

In other words, when the focusing driving structure drives the carrier and the lens to move along the optical axis of the lens to implement automatic focusing, the elastic member does not generate an elastic force on the carrier and the lens.

In a feasible implementation, the elastic member includes a first lug and a second lug, and an elastic segment that is connected between the first lug and the second lug. Both the first lug and the second lug are fastened on the seat body, and the elastic segment extends to a position below the carrier. When the carrier and the lens are located at the first position, the carrier is in contact with the elastic segment, and the elastic segment deforms to generate an elastic force pointing from the first position to the second position.

In a feasible implementation, the camera driving motor further includes an attraction structure, where the attraction structure is configured to generate an attraction force with the slide bar. When the carrier and the lens move along the optical axis of the lens, the carrier slides along the axial direction of the slide bar under attraction of the attraction force.

When the carrier carrying the lens moves relative to the seat body along the optical axis direction of the lens, to enable the carrier to stably slide along the slide bar, in this implementation, the attraction structure is disposed, where the attraction structure may generate an attraction force between the carrier and the slide bar. Under an action of the attraction force, the carrier slides along the slide bar.

In a feasible implementation, the attraction structure includes a magnet, where the magnet is fastened on the carrier and disposed close to the slide bar, and the attraction force is generated between the magnet and the slide bar.

When the carrier carrying the lens moves relative to the seat body along the optical axis direction of the lens, to enable the carrier to stably slide along the slide bar, in this embodiment of this application, the magnet is disposed, so that the attraction force (which may be referred to as a clamping force) is generated between the magnet and the slide bar, thereby enabling the carrier to clamp the slide bar and slide stably along the slide bar in a movement process. This improves movement stability.

In a feasible implementation, the focusing driving structure includes a first magnet and a first coil that faces the first magnet, where one of the first magnet and the first coil is disposed on the carrier, and the other is disposed on the seat body. The first slide bar and the magnet are disposed on a side of the first magnet, and the magnet is closer to the first slide bar than the first magnet.

Electromagnetic induction is generated between the coil and the magnet in the focusing driving structure, and a magnetic attraction force may be generated between the slide bar and the magnet. To reduce impact between the electromagnetic induction and the magnetic attraction force, in an example of this application, the magnet in the attraction structure is closer to the slide bar than a focusing driving unit.

In a feasible implementation, the focusing driving structure includes the first magnet and the first coil opposite to the first magnet, where one of the first magnet and the first coil is disposed on the carrier, and the other is disposed on the seat body. The camera driving motor further includes a position detection structure, where the position detection structure is configured to detect a position at which the carrier slides relative to the slide bar. The position detection structure includes an electromagnetic transducer and a magnet, where the magnet in the position detection structure is shared with the first magnet in the focusing driving structure.

In a feasible implementation, the carrier has an abutting surface in sliding fit with the slide bar, and when the carrier slides along the axial direction of the slide bar, the slide bar is in contact with the abutting surface.

The carrier can stably slide along the slide bar through contact between the slide bar and the abutting surface.

In a feasible implementation, the camera driving motor further includes an electrical connection structure. A variable aperture, the focusing driving structure, and the image stabilization driving structure in the camera module are all electrically connected to a circuit board of the camera driving motor through the electrical connection structure.

In a feasible implementation, the electrical connection structure includes: a first spring arm, a second conductive lead, and a ground lead. A part of the first spring arm is connected to the base, and the other part of the first spring arm is connected to the seat body. The fixed claw is electrically connected to the circuit board of the camera driving motor through the second conductive lead, and the first spring arm is electrically connected to the circuit board of the camera driving motor through the ground lead.

In a feasible implementation, the electrical connection structure includes: a second spring arm, a first conductive lead, and a flexible printed circuit. A part of the second spring arm is electrically connected to the variable aperture. The flexible printed circuit is configured to electrically connect to the circuit board of the camera driving motor, and the other part of the second spring arm is electrically connected to the flexible printed circuit through the first conductive lead. The focusing driving structure is electrically connected to the flexible printed circuit through the first conductive lead.

In this example, the variable aperture in the camera module can be electrically connected to the circuit board through the second spring arm, the first conductive lead, and the flexible printed circuit.

In a feasible implementation, the seat body includes a main body portion and an extension portion. The extension portion is disposed on a side that is of the main body portion and that is close to the base, and the extension portion extends along a circumferential direction of an outer edge of the main body portion in a direction away from the main body portion. The accommodating cavity runs through the main body portion and the extension portion. There is a gap between the extension portion and the base, and the plurality of balls are disposed in the gap.

In this way, there is some space on a periphery of the main body portion, and another structural member in the camera module can be disposed by using the space.

According to still another aspect, this application further provides a camera module. The camera module includes a lens and the camera driving motor in any one of the foregoing implementations, where the lens is mounted on the carrier.

The camera module provided in embodiments of this application includes the foregoing camera driving motor. An image stabilization driving structure for implementing optical image stabilization includes a movable claw, a fixed claw, and an SMA wire that is connected between the fixed claw and the movable claw. In other words, the driving structure is an SMA driving structure. The SMA driving structure has a simple structure and a small footprint, so that a volume of the camera driving motor can be reduced, thereby implementing miniaturization of the camera module.

According to yet another aspect, this application further provides an electronic device. The electronic device includes a camera module and a computing controller in any one of the foregoing implementations. The computing controller is electrically connected to the camera module.

The electronic device provided in embodiments of this application includes the foregoing camera module. Therefore, the electronic device provided in embodiments of this application and the camera module in the foregoing technical solutions can resolve a same technical problem, and achieve a same expected effect.

### BRIEF DESCRIPTION OF DRAWINGS

FIG. 1 is a diagram of a structure of an electronic device according to an embodiment of this application;
FIG. 2 is a diagram of a structure of a camera module in FIG. 1;
FIG. 3 is a diagram of an exploded structure of the camera module in FIG. 2;
FIG. 4 is a diagram of a structure of a camera driving motor according to an embodiment of this application;
FIG. 5 is a diagram of a structure of a camera driving motor after a housing is removed according to an embodiment of this application;
FIG. 6 is a diagram of an exploded structure of a camera driving motor according to an embodiment of this application;
FIG. 7 is a diagram of an exploded structure of a camera driving motor for displaying a focusing driving structure according to an embodiment of this application;
FIG. 8 is a diagram of an exploded structure of a camera driving motor for displaying an image stabilization driving structure according to an embodiment of this application;
FIG. 9 is a diagram of a structure of a camera driving motor for displaying an image stabilization driving structure according to an embodiment of this application;
FIG. 10 is a diagram of a structure of a camera driving motor for displaying an image stabilization driving structure according to an embodiment of this application;
FIG. 11 is a diagram of a structure of a camera driving motor for displaying an image stabilization driving structure according to an embodiment of this application;
FIG. 12 is a diagram of an exploded structure of a camera driving motor for displaying a plurality of balls according to an embodiment of this application;
FIG. 13 is a diagram of a structure of a camera driving motor for displaying a plurality of groups of balls according to an embodiment of this application;
FIG. 14 is a diagram of an exploded structure of a camera driving motor for displaying a magnetic attraction structure according to an embodiment of this application;
FIG. 15 is a diagram of a structure of a camera driving motor for displaying a disposition manner of a magnetic attraction structure according to an embodiment of this application;
FIG. 16 is a diagram of a structure of a camera driving motor for displaying a disposition manner of a plurality of groups of balls and a plurality of groups of magnetic attraction structures according to an embodiment of this application;
FIG. 17 is a diagram of a structure of a camera driving motor for displaying a disposition manner of a spring arm according to an embodiment of this application;
FIG. 18 is a diagram of a structure of a camera driving motor for displaying a disposition manner of a spring arm according to an embodiment of this application;
FIG. 19 is a diagram of a structure of a camera driving motor for displaying a spring arm according to an embodiment of this application;
FIG. 20 is a diagram of a structure of a camera driving motor for displaying a disposition manner of a spring arm according to an embodiment of this application;
FIG. 21 is a diagram of a structure of a camera driving motor according to an embodiment of this application;
FIG. 22 is a diagram of a structure of a camera driving motor according to an embodiment of this application;
FIG. 23 is a diagram of a structure of a camera driving motor for displaying movement of a carrier and a lens according to an embodiment of this application;
FIG. 24 is a diagram of a structure of a camera driving motor for displaying a disposition manner of an elastic member according to an embodiment of this application;
FIG. 25 is a diagram of an exploded structure of a camera driving motor for displaying a disposition manner of an elastic member according to an embodiment of this application;
FIG. 26 is a diagram of a structure of a camera driving motor for displaying an elastic member according to an embodiment of this application;
FIG. 27 is a diagram of a structure of a camera driving motor for displaying a disposition manner of an elastic member according to an embodiment of this application;
FIG. 28 is a diagram of a structure of a camera driving motor for displaying a disposition manner of a slide bar according to an embodiment of this application;
FIG. 29 is a diagram of an exploded structure of a camera driving motor for displaying a disposition manner of a slide bar according to an embodiment of this application;
FIG. 30 is a diagram of a circuit structure of a camera driving motor for displaying a position detection structure according to an embodiment of this application;
FIG. 31 is a diagram of a structure of a camera driving motor for displaying a disposition manner of a spring arm according to an embodiment of this application;
FIG. 32 is a diagram of a structure of a camera driving motor for displaying a spring arm according to an embodiment of this application;
FIG. 33 is a diagram of a structure of a camera driving motor for displaying a seat body according to an embodiment of this application;
FIG. 34 is a diagram of an exploded structure of a camera driving motor for displaying a seat body according to an embodiment of this application;
FIG. 35 is a diagram of a structure of a camera driving motor for displaying an electrical connection structure according to an embodiment of this application;
FIG. 36 is a diagram of a structure of a camera driving motor for displaying an electrical connection structure according to an embodiment of this application;
FIG. 37 is a diagram of a structure of a camera driving motor for displaying an electrical connection structure according to an embodiment of this application;
FIG. 38 is a diagram of a structure of a camera driving motor for displaying an electrical connection structure according to an embodiment of this application;
FIG. 39 is a diagram of a structure of a camera driving motor for displaying an electrical connection structure according to an embodiment of this application;
FIG. 40 is a diagram of a structure of a camera driving motor for displaying an electrical connection structure according to an embodiment of this application; and
FIG. 41 is a diagram of an exploded structure of a camera driving motor according to an embodiment of this application.

### DESCRIPTION OF EMBODIMENTS

Embodiments of this application provide an electronic device. The electronic device is a type of electronic device with a photographing function. The electronic device in embodiments of this application may be a mobile phone (mobile phone), a tablet computer (pad), a notebook computer, a smart home, a smart wearable device (for example, a smartwatch, a smart band, smart glasses, or a smart helmet), a virtual reality (virtual reality, VR) electronic device, an augmented reality (augmented reality, AR) electronic device, or the like. The electronic device may alternatively be a handheld device that has a wireless communication function, a computing device or another processing device connected to a wireless modem, a vehicle-mounted device, an electronic device in a 5G network, an electronic device in a future evolved public land mobile network (public land mobile network, PLMN), or the like. This is not limited in embodiments of this application.

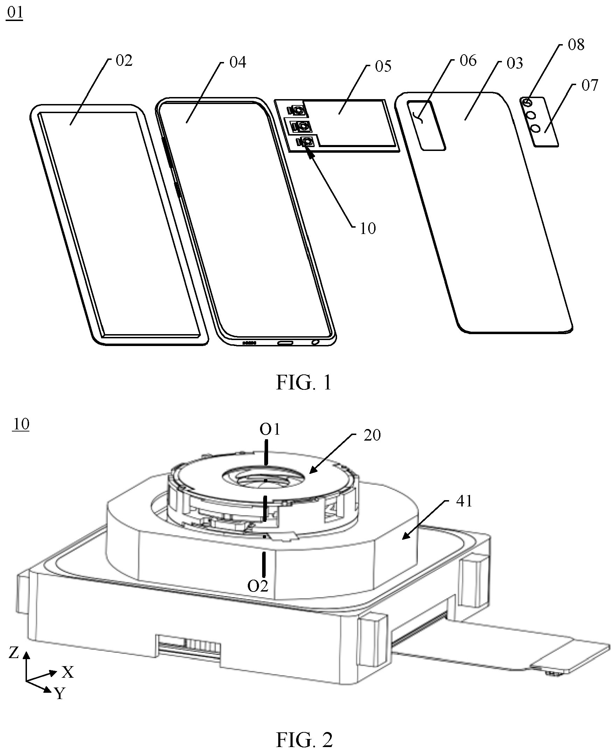

In some embodiments, to enable the electronic device to implement a display function, as shown in FIG. 1, an electronic device 01 provided in this embodiment of this application may include a display 02, a rear housing 03 located on a rear surface (which is disposed opposite to a display surface of the display 02) of the display 02, and a middle frame 04 located between the display 02 and the rear housing 03. The middle frame 04 can support the display 02.

The display 02 may be a liquid crystal display (liquid crystal display, LCD), an organic light-emitting diode (organic light emitting diode, OLED) display, a micro (micro or mini) light-emitting diode (light-emitting diode) display, a quantum dot light-emitting diode (quantum dot light emitting diode, QLED) display, or the like. A type of the display is not limited in this application.

The electronic device 01 may further include a processor 05 electrically connected to the display 02. The processor 05 may be disposed on a side that is of the middle frame 04 and that is away from the display 02. The rear housing 03 is snapped onto the middle frame 04, so that mounting space is formed between the rear housing 03 and the middle frame 04, to accommodate components such as the processor 05 and a battery. The processor 05 may provide display data for the display 02, to drive the display 02 to display an image.

For example, the processor 05 may include one or more processing units. For example, the processor may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may alternatively be integrated into one or more processors.

In addition, the electronic device 01 may further include a gyro (gyro) sensor, a Hall sensor (hall sensor), an external memory interface, an internal memory, a universal serial bus (universal serial bus, USB) interface, a charging management module, a power management module, a battery, an antenna, a mobile communication module, a wireless communication module, an audio module, a speaker, a receiver, a microphone, a headset jack, a sensor module, a button, a camera, and the like, which are electrically connected to the processor 05.

In some embodiments, to enable the electronic device 01 to implement a photographing function, the electronic device 01 provided in embodiments of this application may further include a camera module 10. The camera module 10 may be a front-facing camera module or a rear-facing camera module. The front-facing camera module may be disposed on the rear surface of the display 02 shown in FIG. 1, and a photosensitive surface of the front-facing camera module is located on a display surface side of the display 02. The rear-facing camera module may be disposed on a side that is of the middle frame 04 and that is away from the display 02, that is, located in the mounting space formed between the middle frame 04 and the rear housing 03. A photosensitive surface of the rear-facing camera module is located on a rear surface of the electronic device 01.

For example, the front-facing camera module or the rear-facing camera module may include a plurality of the camera modules 10 shown in FIG. 1. The rear-facing camera module is used as an example. A hole 06 used to expose a part of the camera module 10 is disposed on the rear housing 03. In addition, the electronic device 01 further includes a lens cover 07, which is snapped onto the camera module 10 to protect the camera module 10. The lens cover 07 has a camera hole 08 used to expose a lens of the camera module 10.

The camera module 10 may be one or more of a standard camera module, a long-focus camera module, a wide-angle camera module, an ultra-long-focus camera module, and an ultra-wide-angle camera module. A quantity of the camera modules 10 is not limited in this application. FIG. 1 is described by using an example in which the rear-facing camera module includes the three camera modules 10.

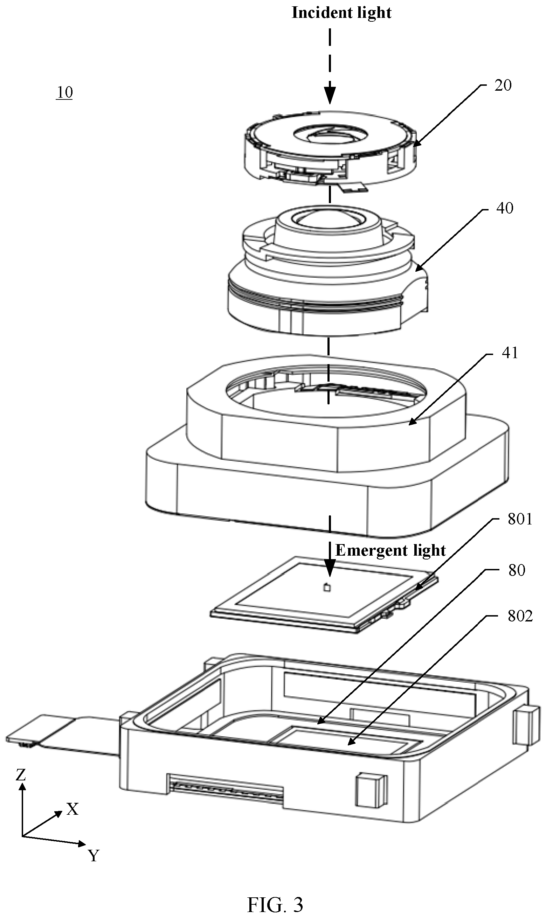

Refer to FIG. 2 and FIG. 3. FIG. 2 is an assembly diagram of the camera module 10 according to an embodiment of this application, and FIG. 3 is an exploded view of the camera module 10 according to an embodiment of this application.

The camera module 10 includes a variable aperture 20, a lens 40, and a camera driving motor 41. For ease of description, XYZ coordinate axes are established in the accompanying drawings. A Z direction may be a direction of an optical axis O1-O2 of the lens 40, that is, a thickness direction of the camera module 10. An XY plane formed by an X direction and a Y direction may be perpendicular to the direction of the optical axis O1-O2 of the lens 40.

The direction of the optical axis O1-O2 may be a direction in which an optical system of the lens 40 transmits light. For example, for the symmetric lens 40, the optical axis O1-O2 may overlap a rotation center line of the optical system of the lens 40. The optical axis O1-O2 of the lens 40 may be used as an optical axis of the camera module 10, and an optical axis of the variable aperture 20 may overlap the optical axis of the camera module 10.

The lens 40 includes a lens barrel and an optical lens element group mounted in the lens barrel. The optical lens element group is configured to transmit light from a scene, and image a photographed scene. Through a design of structural composition of the optical lens element group and a shape and size of an optical lens element, lenses having different characteristics such as wide-angle and telephoto may be obtained. By replacing the lens with different lenses, camera modules having different characteristics such as wide-angle and telephoto may be assembled.

The variable aperture 20 includes a driving apparatus and a plurality of blades. The driving apparatus is configured to drive the plurality of blades, to adjust a size of a light inlet hole enclosed by the plurality of blades, and further adjust an amount of entering light.

The camera driving motor 41 may be configured to drive the lens 40 to move along the optical axis O1-O2, to implement automatic focusing of the lens; or may alternatively be configured to drive the lens 40 to move on the XY plane, to implement image stabilization compensation when the camera module jitters in any direction of the electronic device; or may implement automatic focusing of the lens, and may further implement image stabilization compensation.

To enable optical-to-electrical conversion on light incident to the camera module 10 to generate image information, as shown in FIG. 3, the camera module 10 may further include a light filter 801, an image sensor 802, and a circuit board 80. The image sensor 802 is disposed on the circuit board 80, and the image sensor 802 is electrically connected to the circuit board 80.

For example, the image sensor 802 may be a charge coupled device (charge coupled device, CCD), or may be a complementary metal oxide semiconductor (complementary metal oxide semiconductor, CMOS). The image sensor 802 is disposed at a position of a focal plane of the camera module 10, so that a light image of a photographed object converged by the lens 40 can be received. The image sensor 802 may include a plurality of photosensitive units, and each photosensitive unit converts a received amount of light into an electrical signal that is in a corresponding proportion to the amount of light.

In addition, to improve effective resolution and color reproduction of the image sensor 802, the light filter 801 may be disposed on a light incident side of the image sensor 802. For example, the light filter 801 may be an infrared light filter, and the infrared light filter may filter out infrared light in ambient light and transmit visible light. Alternatively, for another example, the light filter 801 may be a dual-band-pass light filter, which can select bands in two regions of ambient light to pass through, for example, visible light and infrared light, visible light and ultraviolet light, ultraviolet light and infrared light, or the like.

To describe orientations between structural members more clearly below, in this application, light propagation directions in the camera module are drawn in diagrams of structures of some of the following examples. Light entering the variable aperture 20 is incident light, and light emitted from the lens 40 and entering the light filter 801 is emergent light. For example, in FIG. 3, black dashed lines with arrows show propagation directions of light, and show the incident light and the emergent light.

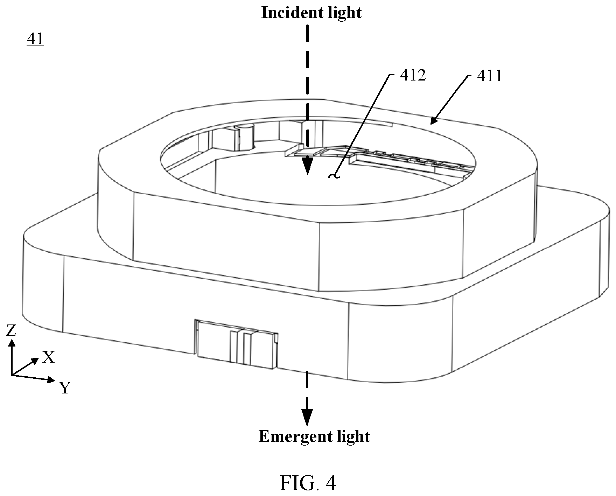

Refer to FIG. 4. FIG. 4 is a diagram of a structure of a camera driving motor according to an embodiment of this application. In this embodiment, the camera driving motor 41 includes a housing 411, and the housing 411 is configured to protect an internal structure of the camera driving motor from water and dust. When the electronic device is assembled, the camera driving motor is fastened in the electronic device through the housing.

An assembly cavity 412 is disposed in the housing 411, and an opening in communication with the assembly cavity 412 is disposed on the housing 411. A shape of the opening includes but is not limited to a circle, a square, an ellipse, and a polygon.

The assembly cavity 412 is configured to accommodate the lens 40 and at least a part of the variable aperture 20. A specific avoidance gap is maintained between a periphery of a housing edge at the opening and both the lens 40 and the variable aperture 20, to avoid the lens 40 when the lens moves obliquely in any direction around.

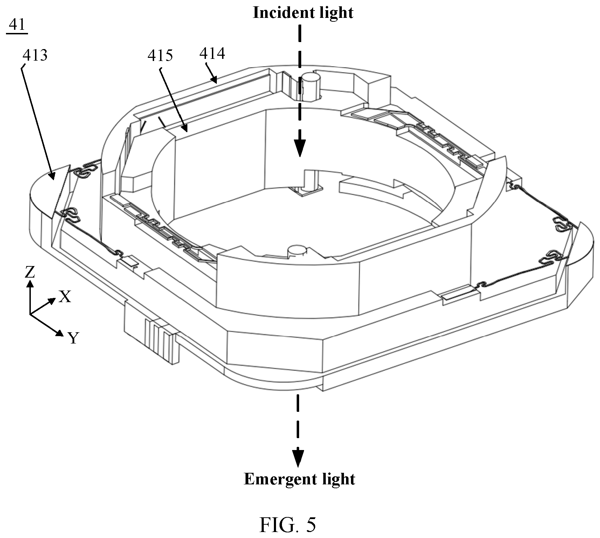

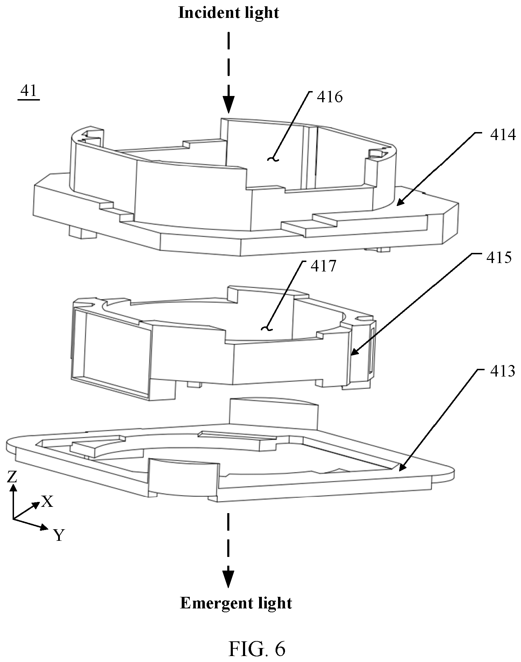

FIG. 5 is a diagram of a structure of the camera driving motor 41 after the housing 411 is removed according to an embodiment of this application. FIG. 6 is an exploded view of FIG. 5. FIG. 6 shows a partial explosion but not a complete explosion of the camera driving motor.

In this embodiment, as shown in FIG. 5, the camera driving motor 41 further includes a base 413, a seat body 414, and a carrier 415. The base 413, the seat body 414, and the carrier 415 may be disposed in the housing 411 of the camera driving motor. The seat body 414 is located on the base 413.

As shown in FIG. 6, an accommodating cavity 416 is formed in the seat body 414, the carrier 415 is located in the accommodating cavity 416, the carrier 415 has a lens mounting hole 417, and the lens mounting hole 417 is configured to mount the lens 40.

In addition to the base 413, the seat body 414, and the carrier 415, the camera driving motor 41 may further include a focusing driving structure. The focusing driving structure may be located between the seat body 414 and the carrier 415. The focusing driving structure is configured to drive the carrier 415 to move along an axial direction (Z direction) of the lens mounting hole relative to the seat body 414, so as to drive the lens 40 in the lens mounting hole 417 to move along the optical axis O1-O2, thereby forming an automatic focusing camera module.

It may be understood that, when the camera module provided in this embodiment of this application performs the automatic focusing, the seat body 414 is a fixed member, the carrier 415 is a movable member, and the lens 40 is fastened to the movable member, namely, the carrier 415. Driven by the focusing driving structure, when the movable member moves in the Z direction relative to the fixed member, the lens 40 may be simultaneously driven to move in the Z direction, to implement the automatic focusing.

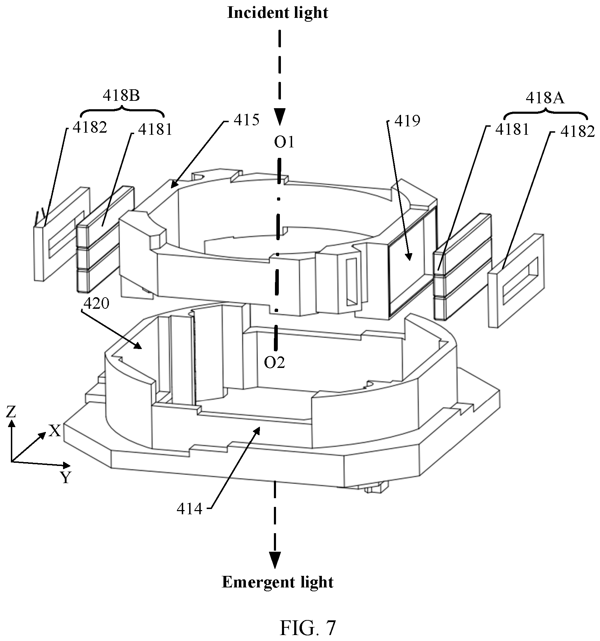

As shown in FIG. 7, FIG. 7 shows an example of a feasible structure of the focusing driving structure. The focusing driving structure includes a plurality of groups of focusing driving units, and the plurality of groups of focusing driving units are arranged at intervals along a circumferential direction of the carrier 415. In some examples, the plurality of groups of focusing driving units may be symmetrically disposed with respect to the optical axis O1-O2 of the lens.

For example, FIG. 7 includes two groups of focusing driving units. The two groups of focusing driving units include a focusing driving unit 418A and a focusing driving unit 418B. The focusing driving unit 418A and the focusing driving unit 418B are disposed opposite to each other. For example, the focusing driving unit 418A and the focusing driving unit 418B may be symmetrically disposed with respect to the optical axis O1-O2 of the lens.

In an example of this application, each group of focusing driving units includes a magnet 4181 and a coil 4182. One of the magnet 4181 and the coil 4182 is disposed on the seat body 414, and the other is disposed on the carrier 415. For example, in FIG. 7, the magnet 4181 is disposed on the carrier 415, and the coil 4182 is disposed on the seat body 414.

There are a plurality of manners of disposing the magnet 4181 on the carrier 415. For example, in an example in FIG. 7, a first mounting groove 419 is disposed on a wall surface that is of the carrier 415 and that faces the seat body 414, and the magnet 4181 is located in the first mounting groove 419.

FIG. 7 shows an example of an arrangement manner of the coil 4182. A second mounting groove 420 is disposed on a wall surface that is of the seat body 414 and that faces the carrier 415, and the coil 4182 is located in the second mounting groove 420.

In an example of this application, during the automatic focusing, the camera module generates an ampere force through the magnet 4181 and the coil 4182, so that the carrier 415 carrying the lens moves up and down along the optical axis O1-O2 of the lens, to implement automatic focusing.

In some alternative structures, one focusing driving unit may include a plurality of magnets 4181. All the plurality of magnets 4181 may generate a magnetic field with the energized coil 4182, thereby increasing strength of the generated magnetic field. The plurality of magnets 4181 may be arranged in a Halbach array (Halbach array) structure shown in FIG. 7.

The camera driving motor in an example of this application includes the focusing driving structure for implementing the automatic focusing, and further includes an image stabilization driving structure for implementing optical image stabilization.

In an example of this application, the image stabilization driving structure is connected to the base 413 and the seat body 414, and the image stabilization driving structure drives the seat body 414, the carrier 415, and the lens 40 to move along the XY plane that is perpendicular to the optical axis O1-O2 of the lens, to implement image stabilization compensation.

The seat body 414 in this example of this application serves as the fixed member for implementing an automatic focusing function, and may further serve as the movable member for implementing an optical image stabilization function. Compared with separately disposing the fixed member and the movable member for the automatic focusing and the fixed member and the movable member for optical image stabilization, in this application, a quantity of structural members can be reduced, so that a volume of the entire camera driving motor can be reduced, thereby implementing a miniaturization design of the camera driving motor.

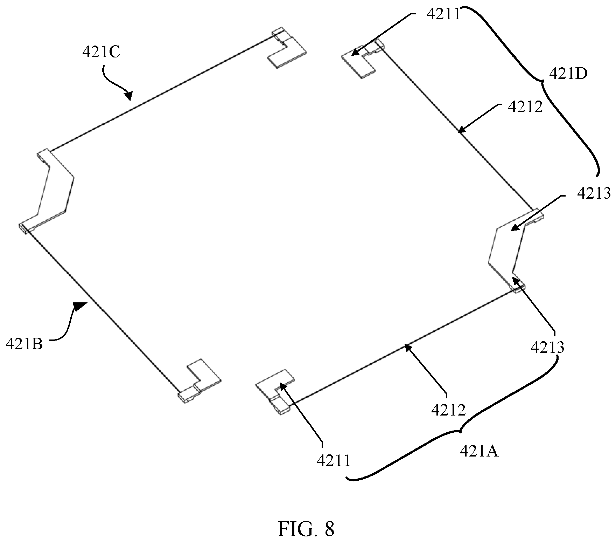

In some embodiments, as shown in FIG. 8, FIG. 8 shows an example of a feasible structure of the image stabilization driving structure. The image stabilization driving structure may include a plurality of groups of image stabilization driving units, and the plurality of groups of image stabilization driving units may be arranged around a circumferential direction of the base.

For example, in FIG. 8, the image stabilization driving structure includes four groups of image stabilization driving units: an image stabilization driving unit 421A, an image stabilization driving unit 421B, an image stabilization driving unit 421C, and an image stabilization driving unit 421D. The image stabilization driving unit 421A, the image stabilization driving unit 421B, the image stabilization driving unit 421C, and the image stabilization driving unit 421D are arranged along the circumferential direction of the base.

Still as shown in FIG. 8, each group of image stabilization driving units includes a fixed claw 4211, a movable claw 4213, and a shape memory alloy (shape memory alloy, SMA) wire 4212 connecting the fixed claw 4211 and the movable claw 4213. One end of the SMA wire 4212 is connected to the movable claw 4213, and the other end is connected to the fixed claw 4211.

The image stabilization driving structure in an example of this application uses an SMA driving assembly to form an SMA driving motor. The SMA driving assembly has features such as a large driving force and a small volume. In this way, a volume of the entire camera driving motor can be reduced.

In some feasible structures, as shown in FIG. 8, each group of image stabilization driving units may include one movable claw 4213, one fixed claw 4211, and one SMA wire 4212, where one SMA wire 4212 is connected between one movable claw 4213 and one fixed claw 4211. The driving structure in this example of this application is a 4-wire SMA driving assembly. The 4-wire SMA driving assembly has a simple structure and a small footprint.

Still as shown in FIG. 8, the movable claws 4213 of two adjacent groups of image stabilization driving units are disposed close to each other and connected. For example, the image stabilization driving unit 421A is adjacent to the image stabilization driving unit 421D, and the movable claw 4213 of the image stabilization driving unit 421A is connected to the movable claw 4213 of the image stabilization driving unit 421D. Alternatively, in some examples, the movable claw 4213 of the image stabilization driving unit 421A and the movable claw 4213 of the image stabilization driving unit 421D are integrated structural members.

As shown in FIG. 8, the fixed claws 4211 of two adjacent groups of image stabilization driving units are disposed close to each other and separated. For example, the image stabilization driving unit 421A is adjacent to the image stabilization driving unit 421B. The fixed claw 4211 of the image stabilization driving unit 421A and the fixed claw 4211 of the image stabilization driving unit 421B are close to each other, and the two fixed claws 4211 are structural members independent of each other.

In some examples, the fixed claw 4211 may serve as a connection terminal for a first electrode of the SMA wire 4212, and the movable claw 4213 may serve as a connection terminal for a second electrode of the SMA wire 4212. For example, the fixed claw 4211 may serve as a connection terminal for a positive electrode of the SMA wire, and the movable claw 4213 may serve as a connection terminal for a negative electrode of the SMA wire.

As shown in FIG. 8, the image stabilization driving unit 421A and the image stabilization driving unit 421D are disposed adjacent to each other, and the movable claw 4213 of the image stabilization driving unit 421A and the movable claw 4213 of the image stabilization driving unit 421D are connected. For example, the fixed claw 4211 of the image stabilization driving unit 421A serves as the connection terminal for the positive electrode, and the fixed claw 4211 of the image stabilization driving unit 421D also serves as the connection terminal for the positive electrode. The movable claw 4213 of the image stabilization driving unit 421A and the movable claw 4213 of the image stabilization driving unit 421D that are connected serve as the connection terminal for the negative electrode. In this example of this application, the SMA wire 4212 is a wire structure made of an SMA. The SMA may be a nickel-titanium alloy material, and has a characteristic of contracting when heated and expanding when cooled. When no current is applied to the SMA wire, the SMA wire is in a loose state. When a current flows into the SMA wire, due to a resistance characteristic, the SMA wire converts a part of electric energy into thermal energy. The SMA wire contracts under the thermal energy of the SMA wire, to apply a pulling force to the seat body 414. This can drive the seat body 414 to move in any direction around, thereby implementing optical image stabilization.

A position relationship among four SMA wires is defined, so that the SMA driving assembly can control electrical signals in the four SMA wires, to enable a resultant force of the four SMA wires on the seat body to move along the XY plane. Because the seat body 414 and the carrier 415 carrying the lens may be translated relative to the base 413 at the same time, the SMA driving assembly can drive the lens assembly to translate, so that the camera module implements the optical image stabilization.

There are a plurality of cases for manners of arranging the movable claw 4213, the fixed claw 4211, and the SMA wire 4212 of the image stabilization driving structure 421.

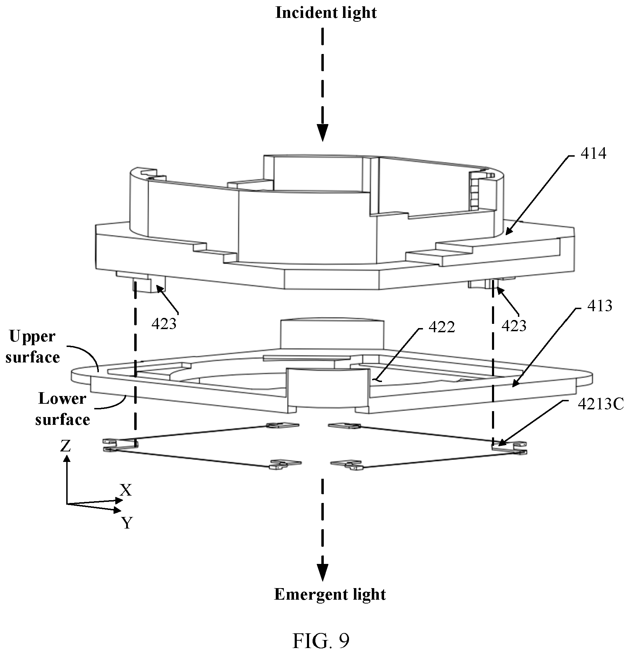

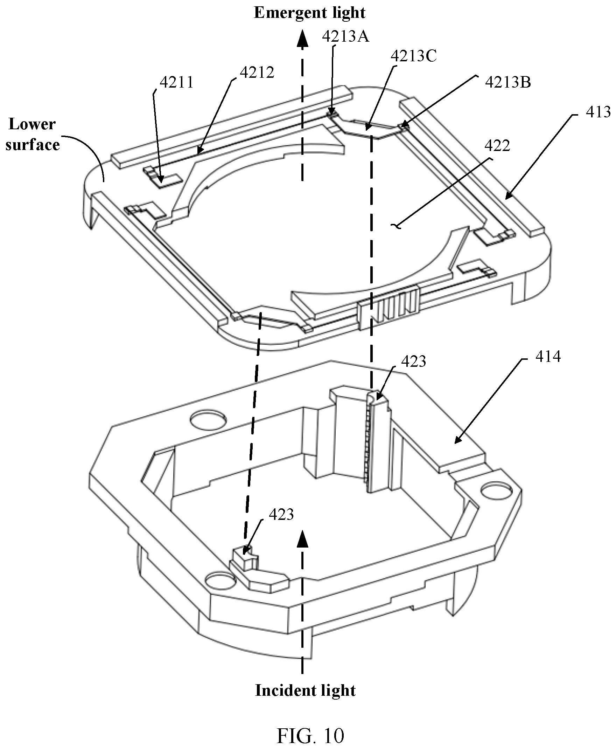

As shown in FIG. 9 and FIG. 10, FIG. 9 is an exploded view of the image stabilization driving structure and another structural member, and FIG. 10 is a viewable diagram of the structure shown in FIG. 9 after being rotated by 180°.

With reference to FIG. 9 and FIG. 10, the fixed claw 4211 is located on a lower surface of the base 413, and is fastened to the base 413. It may be understood that the base 413 has an upper surface and a lower surface opposite to each other, where the upper surface is close to a light incident side, the lower surface is close to a light exit side, and the fixed claw 4211 is fastened to the lower surface of the base 413.

As shown in FIG. 9 and FIG. 10, a part of the movable claw 4213 is located on a lower surface of the seat body 414, and is fastened to the seat body 414. The lower surface of the seat body 414 may be understood as a surface close to the light exit side.

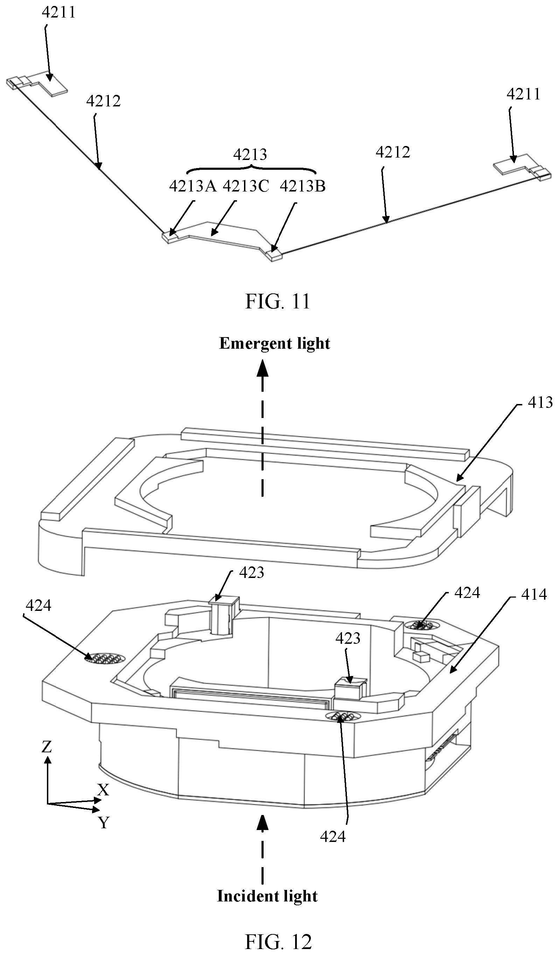

As shown in FIG. 11, FIG. 11 shows a feasible structure of the movable claw 4213 according to this application. The movable claw 4213 includes a first part 4213A and a second part 4213B, and a third part 4213C connecting the first part 4213A and the second part 4213B. The first part 4213A and the second part 4213B are located on the lower surface of the base 413, and are respectively connected to the SMA wires 4212. The third part 4213C is located on the lower surface of the seat body 414, and is fastened to the seat body 414.

To enable the third part 4213C of the movable claw 4213 to be fastened to the seat body 414, as shown in FIG. 9 and FIG. 10, a chamber 422 may be disposed on the base 413, an extension portion 423 that can run through the chamber 422 is disposed on the seat body 414, the third part 4213C protrudes toward the chamber 422, and the third part 4213C extends to a lower part of the extension portion 423, and is fastened to the extension portion 423. Two black dashed lines shown in FIG. 9 and FIG. 10 show a connection relationship between the extension portion 423 and the movable claw 4213.

Still refer to FIG. 9 and FIG. 10. The SMA wire 4212 is located on the lower surface of the base 413. In this example of this application, an extension direction of the SMA wire 4212 is parallel to an extension direction of a side edge of the base.

When the camera module performs the optical image stabilization function, the carrier 415 carrying the lens assembly and the seat body 414 move relative to the base 413. There is a friction force between the carrier 415 and the base 413. A magnitude of the friction force affects an image shooting effect. For example, when the friction force is relatively large, there is a slight jitter (jitter) in a preview image of the camera module.

The following briefly describes how the friction force affects image shooting quality.

In the image stabilization driving structure, a position of the lens is controlled through an actual length difference between two SMA wires opposite to each other. The length of the SMA wire is related to a resistance. Within a specific range, the length of the SMA wire is in a linear relationship with the resistance. In other words, a greater length of the SMA wire indicates a larger resistance. Therefore, when different driving control signals are applied to the four SMA wires, a resistance difference between the two SMA wires at opposite positions may serve as a feedback signal for a length difference of the SMA wires.

Because there is a friction force between the seat body 414 and the base 413, there is a deviation between a target position of a control signal and an actual movement position of the lens. Therefore, feedback-compensation is continuously performed between the resistance feedback signal and the driving control signal. Therefore, when there is a large friction force opposite to a movement direction, due to a resistance, the lens does not actually reach a position to which the lens should have accurately moved. In this case, a control system detects, through a resistor, that the lens does not move to the theoretical position, and then adds a driving signal to increase the pulling force of the SMA wire, so that the lens moves to the theoretical position. In addition, due to the friction force, the compensation is greater than that when there is no friction force. However, the compensation may be excessive. When the compensation is excessive, a driving force of the SMA wire is reduced. In this case, the lens moves reversely to approach the theoretical position. In this case, a direction of the friction force changes, and impact on a compensation effect is greater than that when there is no friction force. The friction force reduces control precision and compensation precision. Because resistance feedback-compensation is performed in real time, that is, the foregoing compensation action is continuously performed, a final result is that an actual lens position fluctuates back and forth in the theoretical position, resulting in the slight jitter (jitter) in the preview image of the camera module. Due to the friction force, a degree of this jitter is severer than that when there is no friction or when there is little friction.

To reduce the friction and weaken the jitter, this embodiment of this application provides some structures that can reduce a friction coefficient during movement of the seat body 414, to improve optical image stabilization performance and image quality.

As shown in FIG. 12, FIG. 12 shows an example of an exploded view of the base 413 and the seat body 414. The exploded view shown in FIG. 12 is a diagram of a structure when the light incident side is located in a lower part and the light exit side is located in an upper part. A plurality of balls 424 are disposed between the seat body 414 and the base 413. When the image stabilization driving structure drives the seat body 414 and the carrier 415 to move along the XY plane perpendicular to the optical axis relative to the base 413, the seat body 414 may slide along the plurality of balls 424.

It may be understood that, as shown in FIG. 12, the plurality of balls 424 are disposed between two opposite surfaces of the base 413 and the seat body 414.

Disposing the plurality of balls 424 between the base 413 and the seat body 414 can reduce the friction coefficient of the seat body 414 in a movement process. Higher stroke control precision of the image stabilization driving structure can reduce an amount of jitter of the lens, thereby improving a photographing effect.

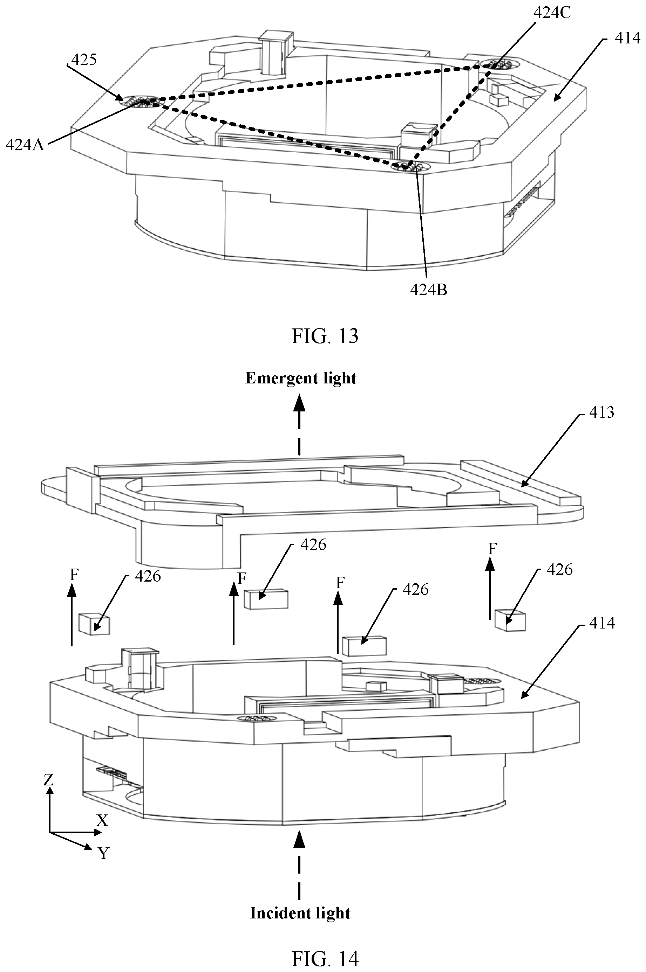

There are a plurality of disposition manners for the plurality of balls in this example of this application. For example, in an example in FIG. 13, a groove 425 may be disposed on the seat body 414, and the balls are disposed in the groove 425 and can roll in the groove 425. For another example, the groove may alternatively be disposed on a surface that is of the base 413 and that faces the seat body 414, and the balls are located in the groove.

As shown in FIG. 13, the groove 425 in this example is disposed on the seat body 414, a part of the balls 424 located in the groove 425 protrudes from the groove 425, and the part that is of the balls 424 and that protrudes from the groove 425 is in contact with the base 413.

In a process of performing the optical image stabilization, to improve movement stability of the seat body 414 relative to the base 413, as shown in FIG. 13, a plurality of groups of balls are included, each group of balls includes a plurality of balls, and the plurality of groups of balls may be arranged at intervals along a circumferential direction of the seat body 414, so that the seat body 414 can move stably.

For example, in FIG. 13, a first group of balls 424A, a second group of balls 424B, and a third group of balls 424C are included, where the first group of balls 424A, the second group of balls 424B, and the third group of balls 424C are arranged at intervals along the circumferential direction of the seat body 414.

As shown in FIG. 13, a connection among the first group of balls 424A, the second group of balls 424B, and the third group of balls 424C may be in a shape of a triangle, for example, may be in a shape of a regular triangle. Using stability of the triangle can further improve movement stability of the seat body 414.

In some feasible structures, a quantity of each group of balls may be the same or may vary.

A manner of arranging the plurality of balls in each group of balls may be the same or may vary.

In this example of this application, when the seat body 414 moves relative to the base 413, a risk that the seat body 414 tilts under gravity of the seat body itself is reduced. As shown in FIG. 14, an exploded view shown in FIG. 14 is a diagram of a structure when the light incident side is located in a lower part and the light exit side is located in an upper part. In this example, a magnetic attraction structure 426 may be further disposed between the base 413 and the seat body 414. It may be understood that, as shown in FIG. 14, the magnetic attraction structure 426 is disposed between two opposite surfaces of the base 413 and the seat body 414.

When the image stabilization driving structure drives the seat body 414 to slide on the XY plane along the plurality of balls, the magnetic attraction structure 426 generates a magnetic attraction force F between the base 413 and the seat body 414. Using the magnetic attraction force F can enable the seat body 414 in the movement process to have an attraction force toward the base 413. This can reduce a probability that the seat body 414 tilts during movement.

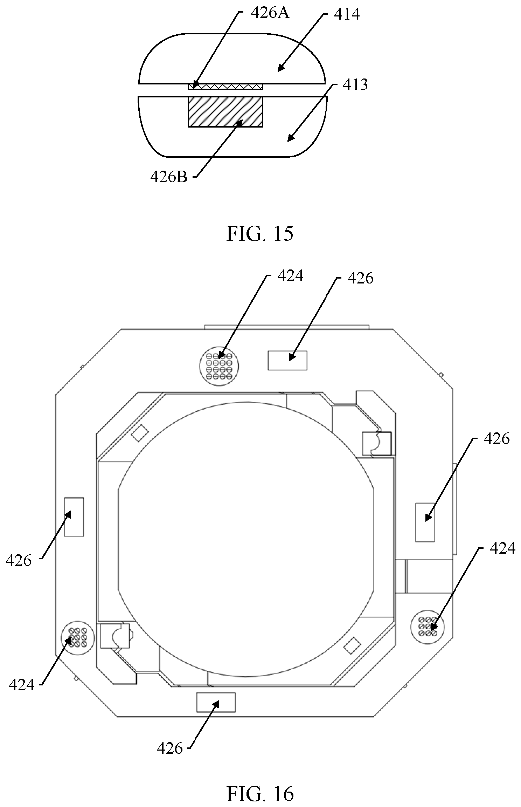

In some examples, as shown in FIG. 15, the magnetic attraction structure 426 may include a magnetic attraction sheet 426A and a magnet 426B. One of the magnetic attraction sheet 426A and the magnet 426B is disposed on the base 413, and the other is disposed on the seat body 414. For example, in FIG. 15, the magnet 426B may be disposed on the base 413, and the magnetic attraction sheet 426A may be disposed on the seat body 414.

There is a gap between the magnetic attraction sheet 426A and the magnet 426B. An attraction force between the magnetic attraction sheet 426A and the magnet 426B is used to enable the seat body 414 to move stably on the XY plane.

To reduce a footprint of the magnet and the magnetic attraction sheet, for example, as shown in FIG. 15, a mounting groove may be disposed in the base 413, and the magnet 426B is disposed in the mounting groove.

In some other examples, the mounting groove may be disposed in the seat body 414, and the magnetic attraction sheet 426A is disposed in the mounting groove of the seat body. This can reduce the footprint of the magnetic attraction sheet 426A and the magnet 426B, thereby reducing a thickness dimension of the entire camera motor.

A plurality of groups of magnetic attraction structures 426 may be disposed, and the plurality of groups of magnetic attraction structures 426 are arranged at intervals along the circumferential direction of the seat body 414. For example, the plurality of groups of magnetic attraction structures may be symmetrically arranged with respect to the optical axis O1-O2 of the lens.

In some structures, when there are a plurality of groups of balls and a plurality of groups of magnetic attraction structures, as shown in FIG. 16, one or more groups of magnetic attraction structures 426 may be disposed between two adjacent groups of balls 424. The plurality of groups of balls and the plurality of groups of magnetic attraction structures may be alternately arranged along the circumferential direction of the seat body 414. This can further improve the movement stability of the seat body, and further weaken the jitter, thereby optimizing imaging quality.

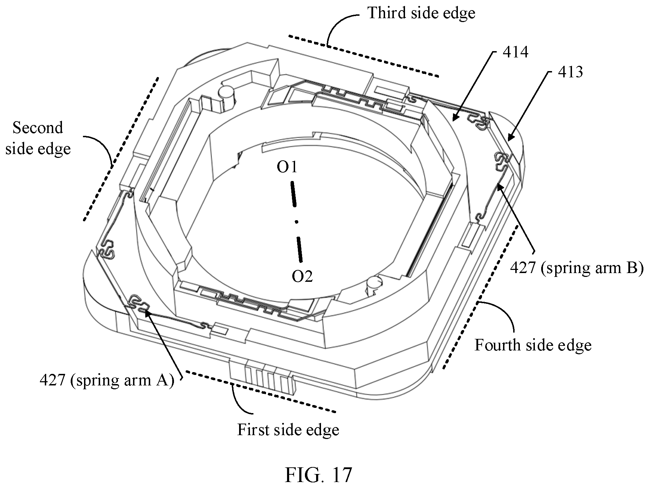

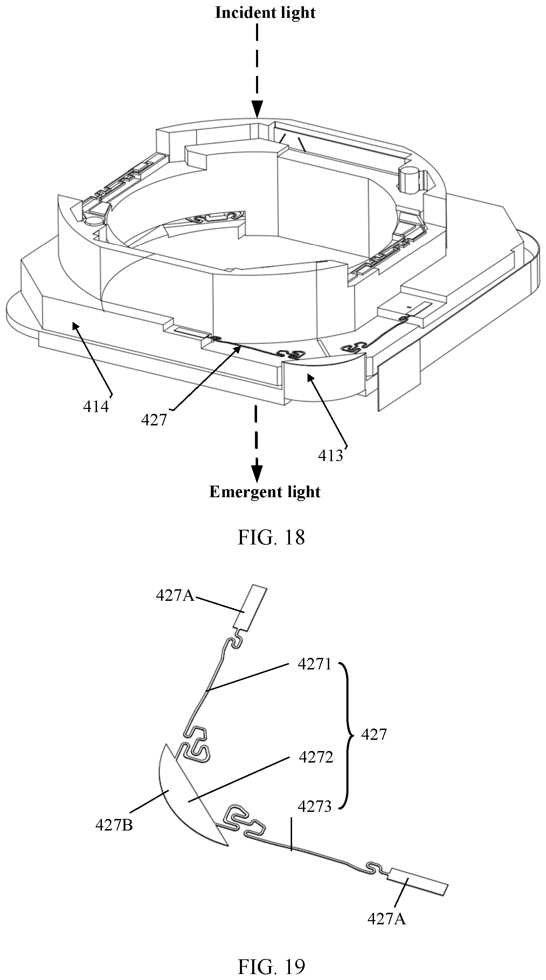

As shown in FIG. 17 and FIG. 18, FIG. 17 and FIG. 18 show a structure of the camera driving motor from different perspectives. In this example of this application, the camera driving motor may further include a first spring arm 427. A part of the first spring arm 427 is connected to the seat body 414, and the other part is connected to the base 413.

In some examples, as shown in FIG. 19, FIG. 19 shows an example of a structure of the first spring arm 427. The first spring arm 427 may be of an L-shaped structure. The first spring arm 427 includes a first section 4271, a second section 4273, and a connection portion 4272 connecting the first section 4271 and the second section 4273.

Still as shown in FIG. 19, an end that is of the first section 4271 and that is away from the connection portion 4272 and an end that is of the second section 4273 and that is away from the connection portion 4272 are connected to the movable seat body 414, and may be referred to as movable ends 427A. The connection portion 4272 is connected to the base 413, and may be referred to as a fixed end 427B.

In some mounting manners, the first spring arm 427 may be disposed between two opposite surfaces of the base 413 and the seat body 414.

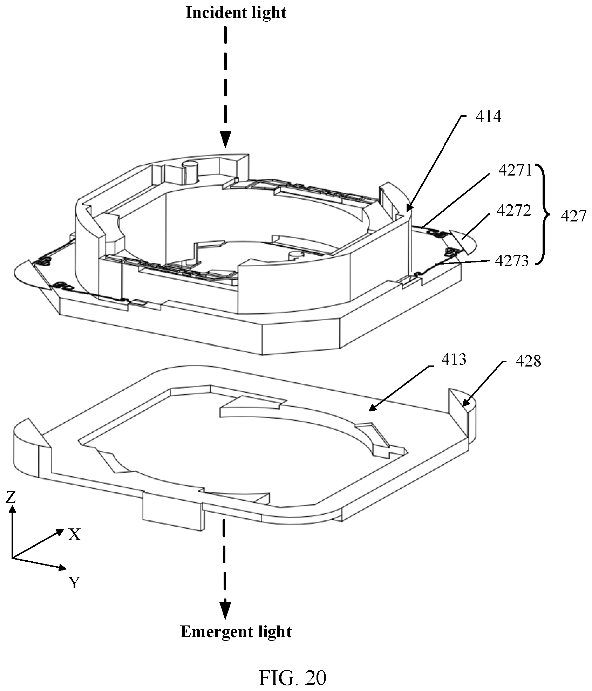

In some other mounting manners, as shown in FIG. 20, the first spring arm 427 may be disposed on a side that is of the seat body 414 and that is away from the base 413.

Because the first spring arm 427 is fastened to the base 413, as shown in FIG. 20, a boss 428 may be disposed on an edge of the base 413, where the boss 428 extends toward the seat body 414. The connection portion 4272 of the first spring arm 427 is fastened to the boss 428, so that the first spring arm 427 is fastened to the base 413.

In this embodiment of this application, the SMA wire is energized to drive the carrier 415, the seat body 414, and the lens to move. In a process of implementing image stabilization, the first spring arm 427 may balance and buffer a force exerted on the seat body 414, so that the seat body 414 moves more stably.

In addition, when the SMA wire is de-energized, the first spring arm can further drive, through an elastic force generated by deformation formed in a process in which the SMA wire is energized to drive the seat body to move, the seat body 414 and the carrier 415 carrying the lens to move to an initial position.

In some examples, returning to FIG. 17 and FIG. 18, two first spring arms 427 may be included. The two first spring arms may be symmetrically arranged with respect to the O1-O2 of the lens. When the two symmetrically arranged first spring arms move on the seat body 414, a same amount of deformation may be generated.

As shown in FIG. 17, the two first spring arms may be respectively referred to as a spring arm A and a spring arm B. A first section 4271 of the spring arm A is parallel to a first side edge of the seat body 414, and a second section 4273 of the spring arm A is parallel to a second side edge of the seat body 414. A first section 4271 of the spring arm B is parallel to a third side edge of the seat body 414, and a second section 4273 of the spring arm B is parallel to a fourth side edge of the seat body. The first side edge is opposite to the third side edge, and the second side edge is opposite to the fourth side edge.

It may be understood that the first section of the spring arm A is disposed opposite to the first section of the spring arm B, and a shape of the first section of the spring arm A may be the same as a shape of the first section of the spring arm B. The second section of the spring arm A is disposed opposite to the second section of the spring arm B, and a shape of the second section of the spring arm A may be the same as a shape of the second section of the spring arm B. In this way, the two spring arms may be symmetrically arranged with respect to the optical axis of the lens, thereby making the elastic force symmetrical.

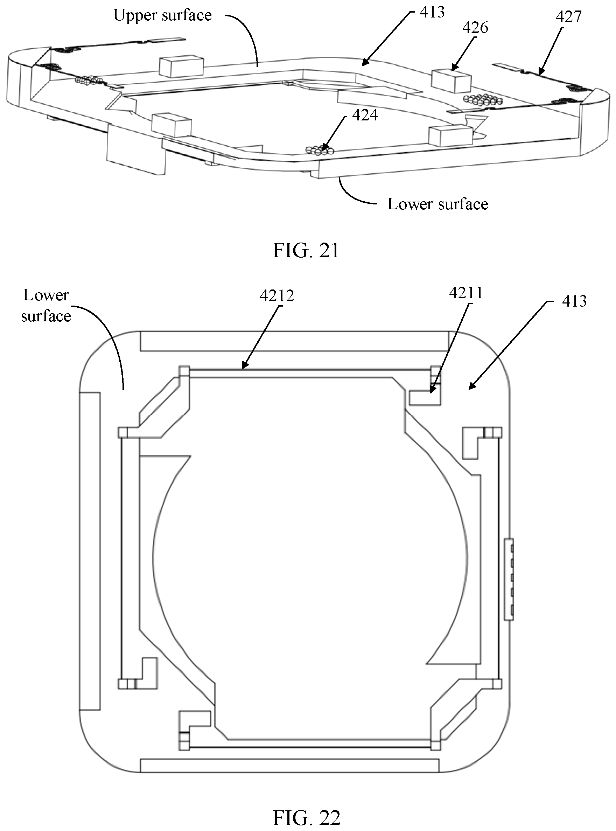

In this embodiment of this application, as shown in FIG. 21 and FIG. 22, FIG. 22 is a view seen from a lower surface in FIG. 21. The balls 424 used to reduce the friction coefficient during movement of the seat body 414 and the magnetic attraction structure 426 used to reduce a tilt during movement of the seat body 414 are both disposed between two opposite surfaces of the base 413 and the seat body 414, which may be understood as being disposed on the upper surface of the base 413. The fixed claw 4211 and the SMA wire 4212 are disposed on the lower surface of the base 413, and the first spring arm 427 is disposed on the side that is of the seat body 414 and that is away from the base 413. In other words, the image stabilization driving structure 421, the balls 424, the magnetic attraction structure 426, and the first spring arm 427 are not centrally disposed, but are distributed at different positions. In this way, space at different positions can be fully used, and interference between a plurality of structural members can be further avoided.

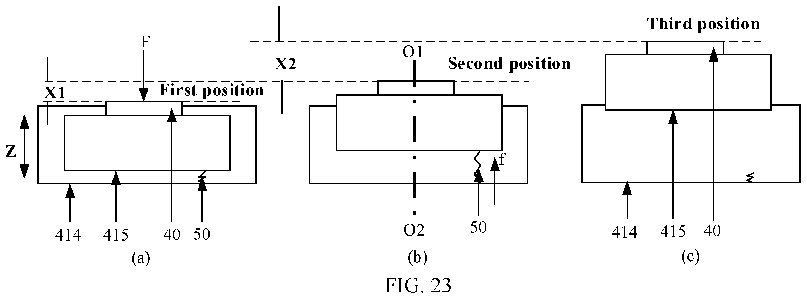

As shown in FIG. 23, FIG. 23 simply shows a position relationship among the seat body 414, the carrier 415, and the lens 40. Because the camera driving motor has a dimension in the thickness direction (the Z direction shown in FIG. 23) of the camera driving motor, with development of miniaturization, lightness, and thinness of terminal devices, the thickness dimension of the camera driving motor needs to be smaller. Alternatively, when the camera driving motor does not work, that is, when the camera driving motor performs neither the automatic focusing function nor the image stabilization compensation function, the thickness dimension of the camera driving motor is small. When the camera driving motor works, the thickness dimension may be adjusted to a preset thickness dimension, to ensure normal use of the automatic focusing and the image stabilization compensation.

In some embodiments, the electronic device may include a preload driving structure. When the camera driving motor does not work, as shown in (a) in FIG. 23, the preload driving structure may apply a preload force F toward the base to the carrier 415 and the lens 40, to reduce the thickness dimension of the entire camera driving motor. For example, the carrier 415 and the lens 40 may be compressed to a first position, as shown in (b) in FIG. 23. When the camera driving motor needs to work, the carrier 415 and the lens 40 may move to a second position. A direction from the first position to the second position is parallel to the optical axis O1-O2 of the lens, and the first position is closer to the seat body 414 than the second position.

In this way, when the carrier 415 and the lens 40 are compressed to the first position, the thickness dimension of the entire camera driving motor can be reduced. When the carrier 415 and the lens 40 move to the second position, the normal use of the automatic focusing and the image stabilization compensation is ensured.

In some camera driving structures, as shown in (a) and (b) in FIG. 23, a distance X1 between the first position and the second position may reach at least 500 µm. This can significantly reduce the thickness dimension of the camera driving motor when the camera driving motor does not work.

When the camera driving motor needs to work, the preload force F applied by the preload driving structure of the electronic device to the carrier 415 and the lens 40 is removed. To enable the carrier 415 and the lens 40 to move from the first position to the second position, in this example of this application, as shown in FIG. 23, an elastic member 50 may be disposed in the camera driving motor, where the elastic member 50 is configured to provide an elastic force f for the carrier 415 and the lens 40 to move from the first position to the second position.

When the automatic focusing needs to be performed, as shown in (b) and (c) in FIG. 23, the carrier 415 carrying the lens 40 may move, under driving of the focusing driving structure, between the second position and a third position, to implement focusing, where the second position is located between the first position and the third position.

When the carrier 415 and the lens 40 move between the second position and the third position, the carrier 415 is separated from the elastic member 50, and the elastic member 50 does not generate an elastic force on the carrier 415 and the lens 40.

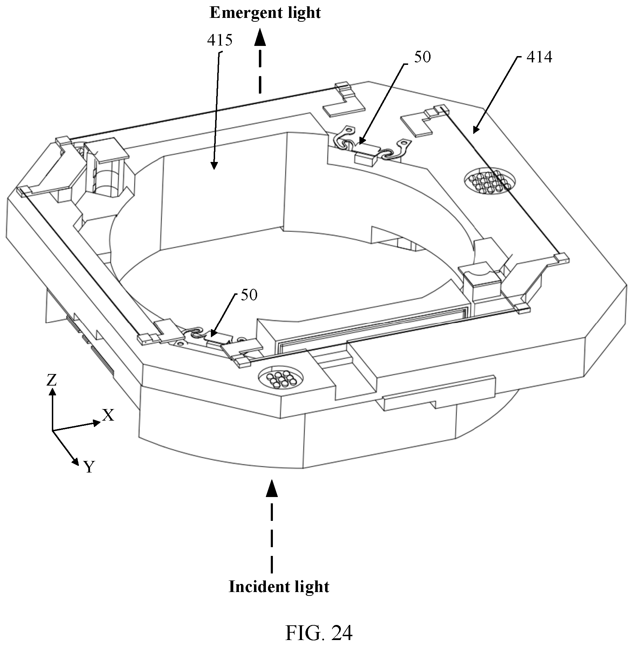

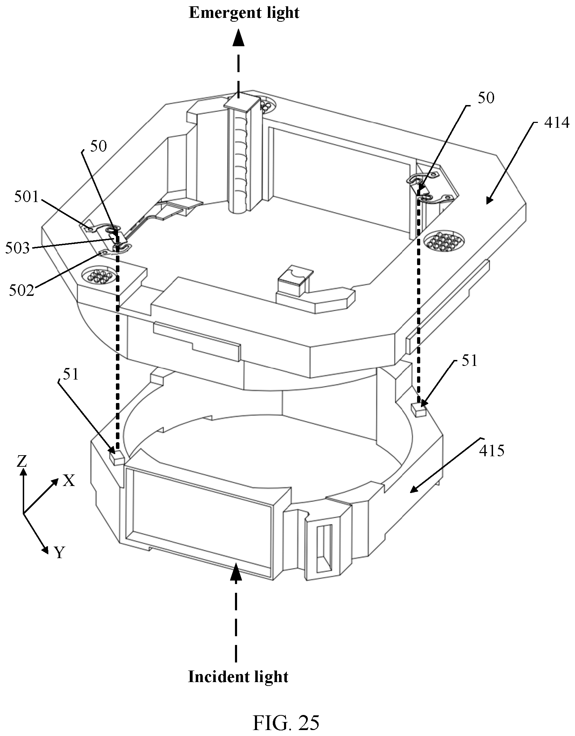

As shown in FIG. 24 and FIG. 25, FIG. 24 shows a mounting manner of the elastic member 50, and FIG. 25 is an exploded view of FIG. 24. In this example, the elastic member 50 may be disposed below the carrier 415. When the carrier 415 and the lens 40 are located at the first position, the carrier 415 is in contact with the elastic member 50, and the elastic member 50 deforms to generate an elastic force pointing from the first position to the second position. Under an action of the elastic force of the elastic member 50, the carrier 415 and the lens 40 may move from the first position to the second position in a direction away from the base.

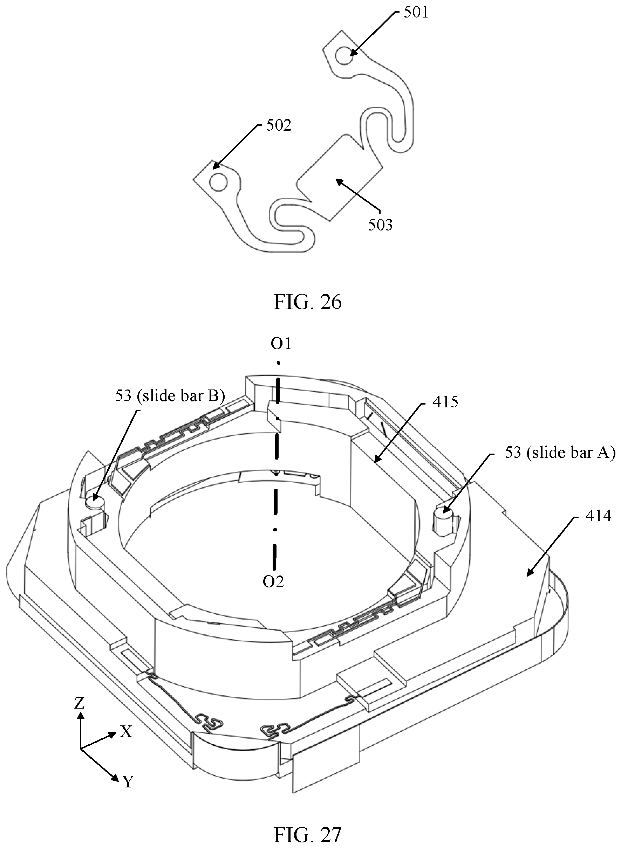

In some examples, as shown in FIG. 26, the elastic member 50 includes a first lug 501, a second lug 502, and an elastic segment 503 that is connected between the first lug 501 and the second lug 502.

As shown in FIG. 24, the first lug 501 and the second lug 502 may be fastened on the seat body 414, and the elastic segment 503 may extend to a position below the carrier 415.

For example, as shown in FIG. 25, a protrusion 51 may be disposed on the carrier 415. Under an action of the preload force F of the preload driving structure on the carrier 415 and the lens 40, when the carrier 415 carrying the lens 40 moves along the optical axis O1-O2 to the first position, the elastic segment 503 of the elastic member 50 is in contact with the protrusion 51, and the elastic segment 503 deforms to generate an elastic force pointing from the first position to the second position. After removal under the action of the preload force F of the preload driving structure on the carrier 415 and the lens 40, the elastic force of the elastic segment 503 may enable the carrier 415 and the lens 40 to move from the first position to the second position.

As shown in FIG. 24 and FIG. 25, in some examples, a plurality of elastic members 50 may be included, and the plurality of elastic members 50 may be symmetrically arranged with respect to the optical axis O1-O2, so that the elastic force is symmetric, and the carrier 415 and the lens 40 move stably under an action of the symmetric elastic force.

In some camera driving structures, returning to FIG. 23, as shown in (b) and (c) in FIG. 23, when the camera module performs the automatic focusing, a distance X2 between the second position and the third position may reach at least 1000 µm. In addition, the distance X1 between the first position and the second position may reach at least 500 µm. In this way, when the carrier and the lens assembly move between the first position and the third position, a stroke (X1+X2) reaches at least 1500 µm.

It may be understood that, in this example of this application, a stroke of the carrier 415 carrying the lens 40 includes a buffer stroke under an action of the elastic force of the elastic member 50, and further includes a focusing stroke under a driving force of the focusing driving structure. Compared with including the focusing stroke only, the stroke of the lens 40 and the carrier 415 in this example of this application is larger.

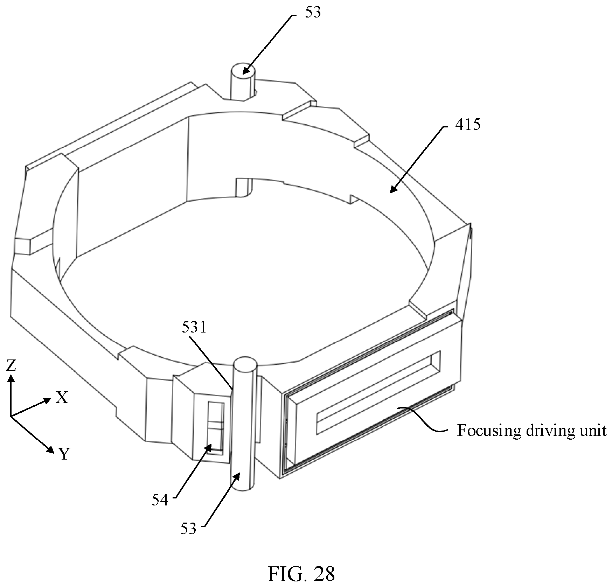

When the carrier 415 carrying the lens 40 has a relatively large stroke, to improve movement stability, as shown in FIG. 27 and FIG. 28, the camera driving motor may further include a slide bar 53. An axial direction of the slide bar 53 is parallel to a direction of an optical axis O1-O2 of the lens. The slide bar 53 is fastened relative to the seat body 414, and the carrier 415 is connected to the slide bar 53 in a sliding manner.

When the carrier 415 and the lens 40 move between the first position and the third position shown in FIG. 23, the slide bar 53 serves as a guiding structure, and the carrier 415 slides along the axial direction of the slide bar 53, to ensure that movement trajectories of the carrier 415 and the lens 40 are basically linear motion.

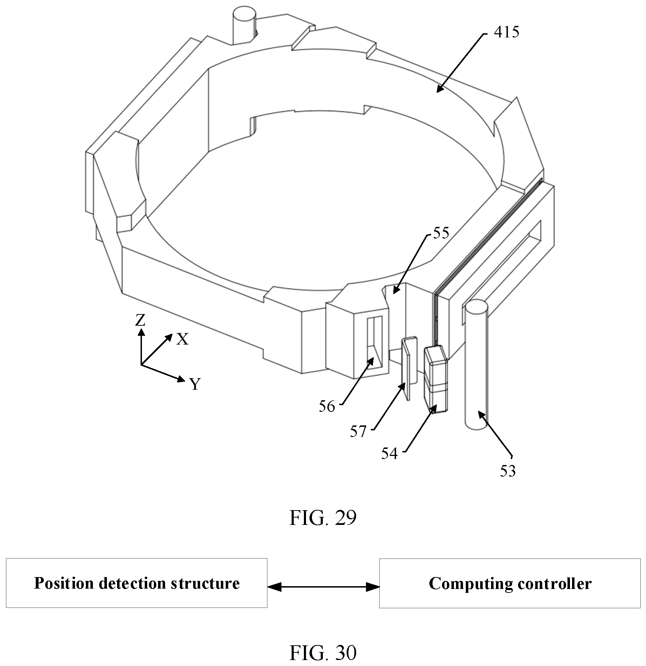

FIG. 29 shows an example of a disposition manner of the slide bar 53. Along a direction parallel to the optical axis O1-O2 of the lens, a guide groove 55 is disposed on the carrier, and the slide bar 53 is disposed in the guide groove 55 in a sliding manner.

To further increase a relative movement speed between the slide bar 53 and the guide groove 55, in some implementations, a lubrication structure may be disposed in the guide groove 55. For example, lubricant may be filled in the guide groove 55. For another example, a film layer structure with a small friction coefficient may be formed on an inner wall surface of the guide groove 55.

When the carrier 415 carrying the lens 40 moves relative to the seat body 414, to improve sliding stability of the carrier 415 relative to the slide bar 53, a plurality of slide bars 53 may be disposed in the camera driving motor. For example, in examples in FIG. 27 and FIG. 28, a slide bar A and a slide bar B are disposed. The slide bar A and the slide bar B may be arranged at intervals along the circumferential direction of the carrier 415, and the slide bar A and the slide bar B are disposed in the corresponding guide grooves.

In some examples, a plurality of slide bars may be disposed. The plurality of slide bars may be evenly distributed along the circumferential direction of the carrier. The plurality of slide bars may alternatively be symmetrically disposed with respect to the optical axis O1-O2 of the lens, so that the lens moves more stably during focusing.

In some structures, as shown in FIG. 28, the carrier 415 has an abutting surface 531 in sliding fit with the slide bar 53, and when the carrier 415 slides along the axial direction of the slide bar 53, the slide bar 53 is in contact with the abutting surface. The slide bar 53 abuts against the abutting surface 531, and plays a positioning role in movement of the slide bar 53, thereby ensuring that the carrier 415 moves linearly along the axial direction of the slide bar 53.

In some feasible structures, a plurality of slide bars 53 and a plurality of elastic members 50 may be included. The plurality of slide bars 53 and the plurality of elastic members 50 may be alternately arranged along the circumferential direction of the carrier 415. In other words, one elastic member 50 may be disposed between two adjacent slide bars 53, and one slide bar 53 may be disposed between two adjacent elastic members 50.

To further enable the carrier 415 carrying the lens 40 to move linearly relative to the seat body 414 along the direction parallel to the optical axis O1-O2 of the lens, in this embodiment of this application, as shown in FIG. 28 and FIG. 29, an attraction structure 54 is further added, where the attraction structure 54 can generate an attraction force on the slide bar 53. In this way, when the focusing driving structure drives the carrier 415 and the lens 40 to move along the optical axis O1-O2 of the lens, the carrier 415 can slide linearly along the axial direction of the slide bar 53 under attraction of the attraction force.

In some examples, as shown in FIG. 29, the attraction structure 54 may include a magnet, where the magnet is fastened to the carrier 415, and the magnet is disposed close to the slide bar 53. For example, the slide bar 53 may be a magnetic metal structural member, and an attraction force f is generated between the magnet and the slide bar. Using the attraction force f enables the carrier 415 to clamp the slide bar 53 in the movement process, thereby sliding along the axial direction of the slide bar 53. Alternatively, the slide bar 53 may be a non-magnetic structural member, for example, a ceramic, and a magnetic material may be formed on an outer wall surface of the ceramic.

Refer to FIG. 29. When a manner in which the magnet clamps the slide bar is used, a mounting cavity 56 may be disposed at a position that is of the carrier 415 and that is located on a side of the slide bar 53, and the magnet is disposed in the mounting cavity 56. For example, the magnet may be disposed in the mounting cavity 56 through an adhesive layer 57.

In some examples, as shown in FIG. 26, the slide bar 53 is disposed close to the coil and the magnet of the focusing driving unit, and the magnet in the attraction structure 54 is disposed close to the slide bar 53. Electromagnetic induction is generated between the coil and the magnet of the focusing driving unit, and a magnetic attraction force is generated between the magnet in the attraction structure 54 and the slide bar 53.

To avoid mutual impact between the electromagnetic induction between the coil and the magnet of the focusing driving unit and the magnetic attraction force between the magnet in the attraction structure and the slide bar, as shown in FIG. 26, the magnet in the attraction structure 54 is closer to the slide bar 53 than the focusing driving unit. In this way, mutual interference between the electromagnetic induction and the magnetic attraction force can be weakened.

In this example of this application, even if the carrier 415 carrying the lens 40 has a relatively large stroke, for example, including the foregoing related buffer stroke and the focusing stroke under the driving force of the focusing driving structure, under an action of the slide bar 53 and the attraction structure 54, the movement trajectories of the carrier 415 carrying the lens 40 can be basically along the optical axis O1-O2, thereby reducing a risk that the lens assembly deviates in a large stroke.

In this example of this application, a position detection structure may be further included, where the position detection structure is configured to detect a position at which the carrier 415 slides relative to the slide bar 53.

For example, the position detection structure may use an electromagnetic transducer (electromagnetic transducer). When the carrier 415 carrying the lens moves and focuses relative to the seat body 414, the electromagnetic transducer is used to sense a magnetic flux change, so as to convert the magnetic flux change into an output signal change, thereby determining a position of the lens.

In some examples, a detection magnet that is disposed opposite to the electromagnetic transducer may be disposed on the carrier 415. In this case, when the carrier 415 equipped with the lens and the detection magnet moves along the direction of the optical axis O1-O2 of the lens, the electromagnetic transducer senses a magnetic flux change of the detection magnet and determines the position of the lens.

In some examples, the detection magnet in the position detection structure may be shared with the magnet in the focusing driving structure. This may simplify the structure.

Refer to FIG. 30. FIG. 30 is a diagram of an internal circuit of an electronic device. In this embodiment of this application, the electronic device further includes a computing controller. In some embodiments, the computing controller and the electromagnetic transducer in the position detection structure may be disposed on a mainboard. Certainly, the electromagnetic transducer and the computing controller may alternatively be disposed on another structure in the electronic device, for example, disposed on a circuit board on which a universal serial bus (universal serial bus, USB) component is located. FIG. 30 merely shows an example in which the electromagnetic transducer and the computing controller are disposed on the mainboard. This should not be considered as a special limitation on this application.

The position detection structure is configured to detect the position of the lens. In some embodiments, the computing controller is a microprocessor. The computing controller is configured to receive and process an electrical signal that is from the camera module and that includes image information. The computing controller is further configured to calculate a lens movement amount based on the position of the lens, and control, based on the lens movement amount, lens movement that drives the camera module.

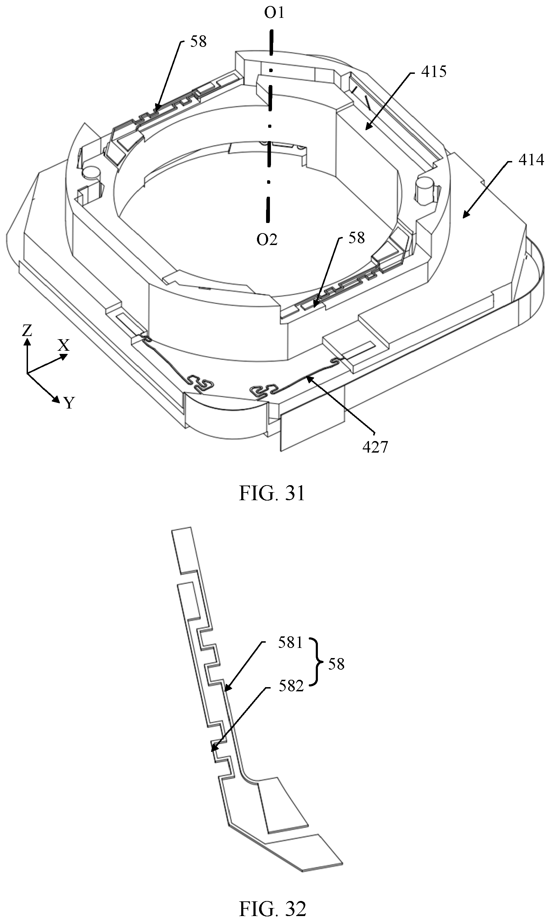

As shown in FIG. 31, the camera driving motor in an example of this application may further include a second spring arm 58. A part of the second spring arm 58 is connected to the seat body 414, and the other part is connected to the carrier 415. When the camera module performs the automatic focusing, and the lens 40, the carrier 415, and the variable aperture move along the optical axis O1-O2 of the lens, the second spring arm 58 deforms, and balances and buffers forces exerted on the variable aperture and the lens assembly, so that the variable aperture and the lens assembly move more stably.

In some examples, as shown in FIG. 31, a plurality of second spring arms 58 may be included, where the plurality of second spring arms 58 are arranged at intervals along the circumferential direction of the carrier 415. For example, the plurality of second spring arms may be symmetrically arranged with respect to the optical axis O1-O2 of the lens. In this case, when the lens, the variable aperture, and the carrier move along the optical axis O1-O2 of the lens, the plurality of second spring arms may generate a same amount of deformation and provide a symmetric elastic force.

FIG. 32 shows an implementation structure of a second spring arm 58 according to an embodiment of this application. The second spring arm 58 includes a first branch arm 581 and a second branch arm 582, where the first branch arm 581 and the second branch arm 582 may be disposed close to each other. One end of each branch arm is connected to the carrier 415, and the other end is connected to the seat body 414.

Using the plurality of separate branch arms disposed in FIG. 32 can further balance and buffer the forces applied to the variable aperture and the lens assembly, thereby enabling the variable aperture and the lens assembly to move more stably.

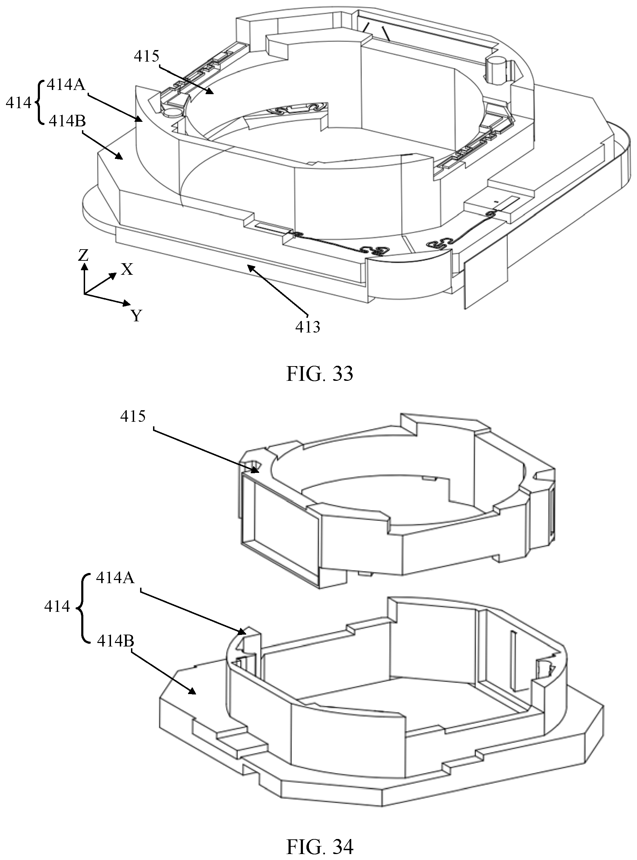

As shown in FIG. 33 and FIG. 34, FIG. 34 is an exploded view of a seat body 414 and a carrier 415 in FIG. 33. The seat body 414 in this example of this application may include a main body portion 414A and an extension portion 414B, where the extension portion 414B is disposed on a side that is of the main body portion 414A and that is close to the base, and the extension portion 414B extends along a circumferential direction of an outer edge of the main body portion 414A in a direction away from the main body portion 414A. In this way, steps shown in FIG. 33 and FIG. 34 may be formed between the main body portion 414A and the extension portion 414B of the seat body.

With the seat body having the steps in this example of this application, space may be formed on a periphery of the main body portion 414A, and another structural member in the camera module may be arranged by using the space.

In some structures, the main body portion 414A and the extension portion 414B may be integrally formed structural members.

As shown in FIG. 33 and FIG. 34, along the direction of the optical axis O1-O2 of the lens, the main body portion 414A and the extension portion 414B have depth dimensions, an accommodating cavity is formed inside the main body portion 414A and the extension portion 414B, and the carrier 415 is disposed in the accommodating cavity.

In some examples, the coil and magnet in the focusing driving structure, and the slide bar and the attraction structure may be disposed in space between the carrier 415 and the main body portion 414A.

In some examples, there is a gap between the extension portion 414B and the base.

The plurality of balls configured to reduce a friction coefficient during movement of the seat body 414 relative to the base 413, and the magnetic attraction structure configured to provide the magnetic attraction force between the seat body 414 and the base 413 may alternatively be disposed in the gap.

In the camera module, an electrical connection structure needs to be disposed, to electrically connect a driving structure of the variable aperture, the focusing driving structure, the image stabilization driving structure, and the like to the circuit board of the camera module.

For example, a circuit structure may be formed on the seat body 414, and a circuit structure may be formed on the base 413. The circuit structure on the seat body 414 and the circuit structure on the base 413 are electrically connected to the circuit board of the camera module, so that the driving structure of the variable aperture, the focusing driving structure, the image stabilization driving structure, and the like form a driving path with the circuit board.

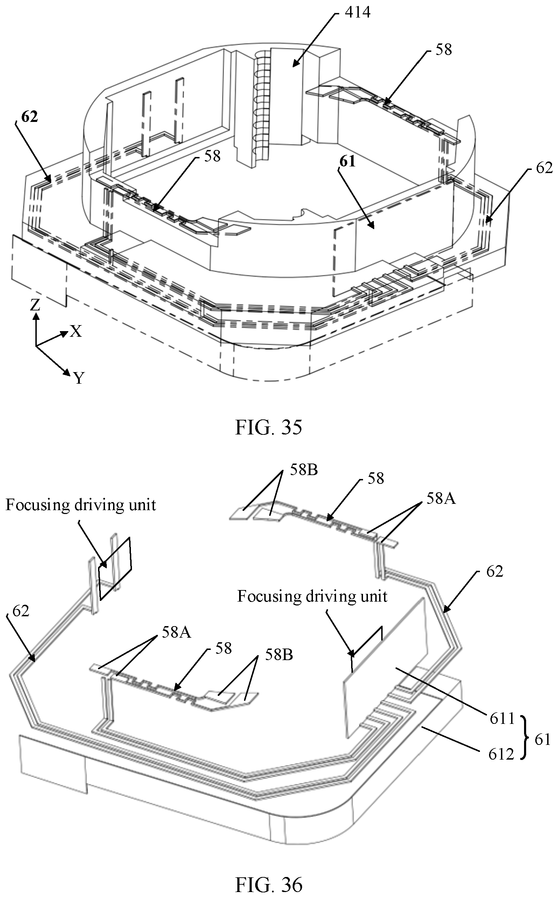

As shown in FIG. 35 and FIG. 36, an example of an electrical connection structure is provided. The electrical connection structure is a flexible structure. The electrical connection structure may include a second spring arm 58. The second spring arm 58 includes a first end 58A and a second end 58B, where the second end 58B of the second spring arm 58 can be electrically connected to the driving structure of the variable aperture. For example, when the driving structure of the variable aperture includes a coil and a magnet, the second end 58B of the second spring arm 58 can be electrically connected to the coil of the variable aperture.

In the example in FIG. 36, two second spring arms 58 are included. Each second spring arm 58 includes two branch arms, where each branch arm has one second end 58B. In this way, the two second spring arms 58 have the four second ends 58B electrically connected to the coil of the variable aperture.

When the driving structure of the variable aperture includes four coils, two of the four second ends 58B are connected to two of the four coils, and the other two of the four second ends 58B are connected to the remaining two of the four coils.

In some examples, as shown in FIG. 35 and FIG. 36, a conductive structure such as a wire may be disposed on the seat body 414 and is electrically connected to a flexible printed circuit (flexible printed circuit, FPC) 61.

The conductive structure has a plurality of implementations. For example, a conductive lead may be formed in an electroplating manner. For another example, a conductive lead may be formed in a manner of embedding metal through insert molding (Insert Molding).

As shown in FIG. 35 and FIG. 36, the first end 58A of the second spring arm 58 can be electrically connected to the flexible printed circuit FPC 61 through a first conductive lead 62 disposed on the seat body 414. In this way, the variable aperture can be electrically connected to the flexible printed circuit FPC 61 through the second spring arm 58 and the first conductive lead 62 disposed on the seat body 414, and the flexible printed circuit FPC 61 is electrically connected to the circuit board of the camera module. In this way, the circuit board of the camera module forms a driving path with the coil of the variable aperture.

It may be understood that the second spring arm 58 in the example of this application has a function of buffering and balancing movement stability of the lens, and further has an electrical connection function.

In some feasible structures, as shown in FIG. 35 and FIG. 36, the coil in the focusing driving unit can be electrically connected to the flexible printed circuit FPC through the conductive structure disposed on the seat body 414. For example, the first conductive lead 62 formed in a manner of embedding metal through insert molding (Insert Molding) is used to electrically connect the coil in the focusing driving structure to the flexible printed circuit FPC, and the flexible printed circuit FPC is electrically connected to the circuit board of the camera module. In this way, the circuit board of the camera module forms a driving path with the coil in the focusing driving structure.

In this example of this application, the position detection structure may alternatively be electrically connected to the flexible printed circuit FPC through the first conductive lead 62 shown in FIG. 36.

In some embodiments, as shown in FIG. 35 and FIG. 36, the flexible printed circuit FPC 61 may include a first part 611 and a second part 612. The first part 611 may be disposed between the carrier 415 and the seat body 414, and is disposed opposite to the coil of the focusing driving unit. The second part 612 surrounds peripheries of the base 413 and the seat body 414, and is electrically connected to the circuit board in the electronic device.

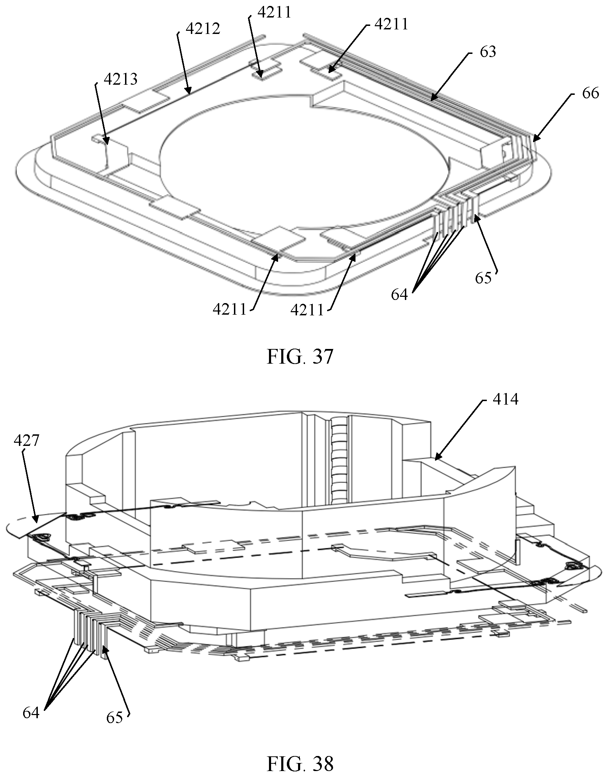

In an example of this application, the image stabilization driving structure includes an SMA driving assembly used for optical image stabilization. To enable the SMA driving assembly to form a driving path with the circuit board of the camera module, as shown in FIG. 37, FIG. 37 shows an electrical connection structure of the SMA driving assembly. A plurality of connection terminals may be included. For example, the plurality of connection terminals may include a signal connection terminal 64 that is electrically connected to the fixed claw 4211. In some feasible structures, a second conductive lead 63 may be formed in a manner of embedding metal through insert molding (Insert Molding), and the signal connection terminal 64 is electrically connected to the fixed claw 4211 through the second conductive lead 63.

As shown in FIG. 37, the SMA driving assembly includes four fixed claws 4211, where the four fixed claws 4211 are respectively electrically connected to the corresponding signal connection terminals 64 through the second conductive lead 63, and the signal connection terminals 64 are electrically connected to the circuit board in the camera module. In this way, the circuit board of the camera module forms a driving path with the fixed claws in the image stabilization driving structure.

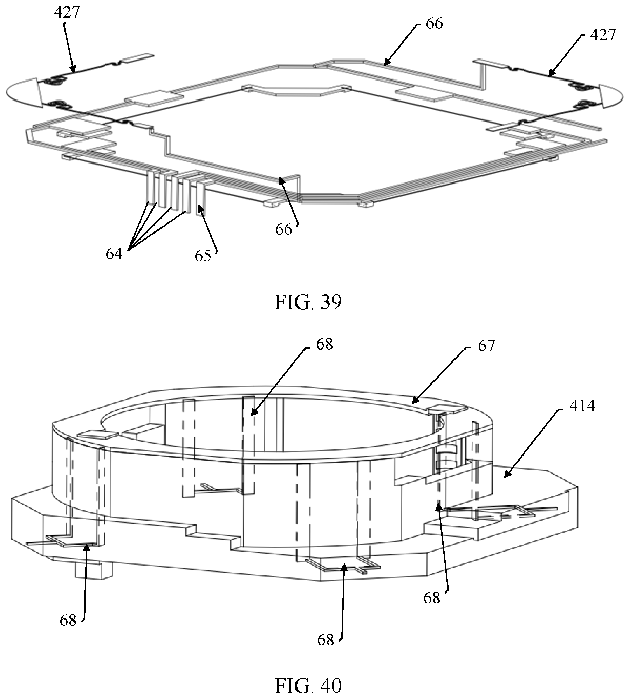

As shown in FIG. 38 and FIG. 39, the plurality of connection terminals further include a ground connection terminal 65, where the ground connection terminal 65 can be electrically connected to the first spring arm 427 through a ground lead 66. The ground lead 66 may form a conductive lead in an electroplating manner, or may form a conductive lead in a manner of embedding metal through insert molding (Insert Molding).

In this embodiment of this application, the first spring arm 427 in the example of this application has a function of buffering and balancing movement stability of the seat body, and further has a grounding function.

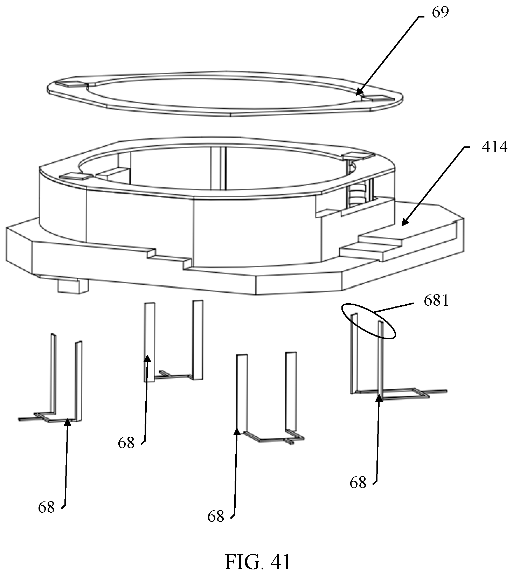

To increase mechanical strength of the entire camera module, as shown in FIG. 40 and FIG. 41, a plurality of brackets 68 may be disposed. For example, the brackets 68 may be embedded into the seat body 414 in a manner of embedding metal through insert molding (Insert Molding), so as to enhance strength of the seat body 414.

In some structures, as shown in FIG. 41, the plurality of brackets 68 may be disposed, and the plurality of brackets 68 may be arranged at intervals along the circumferential direction of the seat body 414.

As shown in FIG. 41, a reinforcing plate 69 may be disposed on a surface of the seat body 414, and an end 681 of the bracket 68 embedded into the seat body 414 may be connected to the reinforcing plate 69, so as to further improve the strength of the seat body 414.

In the descriptions of this specification, the specific features, structures, materials, or characteristics may be combined in a proper manner in any one or more of embodiments or examples.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A camera driving motor, comprising:
a base;
a seat body, located on the base, wherein the seat body has an accommodating cavity;
a carrier, located in the accommodating cavity, wherein the carrier is configured to mount a lens;
an image stabilization driving structure, connected to the base and the seat body, wherein the image stabilization driving structure comprises a plurality of groups of driving units, the plurality of groups of driving units are arranged around a circumferential direction of the base, and each group of the driving units comprises a movable claw and a fixed claw, and an SMA wire connecting the movable claw and the fixed claw, wherein the movable claw is fastened to the seat body, and the fixed claw is fastened to the base; and
a plurality of balls, wherein the plurality of balls are located between the seat body and the base, and when the image stabilization driving structure drives the seat body, the carrier, and the lens to move along a plane perpendicular to an optical axis of the lens, the seat body moves along the plurality of balls.

2. The camera driving motor according to claim 1, wherein the plurality of balls comprise a first group of balls, a second group of balls, and a third group of balls, any one of the first group of balls, the second group of balls, and the third group of balls comprises the plurality of balls, and the first group of balls, the second group of balls, and the third group of balls are arranged at intervals along the circumferential direction of the base.

3. The camera driving motor according to claim 1 or 2, wherein a groove is disposed between the seat body and the base, and the plurality of balls are located in the groove.

4. The camera driving motor according to any one of claims 1 to 3, wherein the camera driving motor further comprises:
a magnetic attraction structure, wherein the magnetic attraction structure is located between the base and the seat body, and when the image stabilization driving structure drives the seat body to move along the plurality of balls, the magnetic attraction structure generates a magnetic attraction force between the base and the seat body.

5. The camera driving motor according to claim 4, wherein the magnetic attraction structure comprises a magnet and a magnetic attraction sheet, wherein one of the magnet and the magnetic attraction sheet is disposed on the base, and the other is disposed on the seat body.

6. The camera driving motor according to claim 4 or 5, wherein
the plurality of balls comprise a plurality of groups of balls, wherein the plurality of groups of balls are arranged at intervals along the circumferential direction of the base, and the magnetic attraction structure is disposed between two adjacent groups of the balls.

7. The camera driving motor according to any one of claims 1 to 6, wherein along the circumferential direction of the base, the movable claws of two adjacent groups of the driving units are disposed close to each other and connected, and the fixed claws of two adjacent groups of the driving units are disposed close to each other and separated.

8. The camera driving motor according to any one of claims 1 to 7, wherein
the fixed claw is located on a lower surface of the base, the movable claw is located on a lower surface of the seat body, and an extension direction of the SMA wire is parallel to an extension direction of a side edge of the base.

9. The camera driving motor according to any one of claims 1 to 8, wherein the camera driving motor further comprises:
a focusing driving structure, a first elastic member, and a first slide bar, wherein
the first elastic member is configured to provide an elastic force for the carrier and the lens to move from a first position to a second position, wherein a direction from the first position to the second position is parallel to the optical axis of the lens, and the first position is closer to the seat body than the second position;
the focusing driving structure drives the carrier and the lens to move between the second position and a third position along the optical axis of the lens, wherein the second position is located between the first position and the third position;
an axial direction of the first slide bar is parallel to an optical axis direction of the lens, and the first slide bar is disposed between the seat body and the carrier; and
when the carrier and the lens move between the first position and the third position, the carrier slides along the axial direction of the first slide bar.

10. The camera driving motor according to claim 9, wherein when the first elastic member is located below the seat body, and the carrier and the lens are located at the first position, the carrier is in contact with the first elastic member, and the first elastic member deforms to generate an elastic force pointing from the first position to the second position.

11. The camera driving motor according to claim 10, wherein when the carrier and the lens move between the second position and the third position, the carrier is separated from the first elastic member.

12. The camera driving motor according to any one of claims 9 to 11, wherein the first elastic member comprises a first lug and a second lug, and an elastic segment that is connected between the first lug and the second lug, wherein both the first lug and the second lug are fastened on the seat body, and the elastic segment extends to a position below the carrier; and
when the carrier and the lens are located at the first position, the carrier is in contact with the elastic segment, and the elastic segment deforms to generate an elastic force pointing from the first position to the second position.

13. The camera driving motor according to any one of claims 9 to 12, wherein the camera driving motor further comprises:
an attraction structure, wherein the attraction structure is configured to generate an attraction force with the first slide bar; and
when the carrier and the lens move along the optical axis of the lens, the carrier slides along the axial direction of the first slide bar under attraction of the attraction force.

14. The camera driving motor according to claim 13, wherein the attraction structure comprises:
a magnet, wherein the magnet is fastened on the carrier and disposed close to the first slide bar, and the attraction force is generated between the magnet and the first slide bar.

15. The camera driving motor according to claim 14, wherein the focusing driving structure comprises a magnet and a coil opposite to the magnet, wherein one of the magnet and the coil is disposed on the carrier, and the other is disposed on the seat body; and
the camera driving motor further comprises:
a position detection structure, wherein the position detection structure is configured to detect a position at which the carrier slides relative to the first slide bar; and
the position detection structure comprises an electromagnetic transducer and a magnet, and the magnet in the position detection structure is shared with the magnet in the focusing driving structure.

16. The camera driving motor according to any one of claims 9 to 15, wherein the camera driving motor further comprises:
a second elastic member and a second slide bar, wherein
the first elastic member, the first slide bar, the second elastic member, and the second slide bar are alternately arranged along a circumferential direction of the carrier.

17. The camera driving motor according to any one of claims 1 to 16, wherein the camera driving motor further comprises an electrical connection structure; and
a variable aperture, the focusing driving structure, and the image stabilization driving structure in a camera module are all electrically connected to a circuit board of the camera driving motor through the electrical connection structure.

18. The camera driving motor according to claim 17, wherein the electrical connection structure comprises:
a first spring arm, wherein a part of the first spring arm is connected to the base, and the other part of the first spring arm is connected to the seat body;
a second conductive lead, wherein the fixed claw is electrically connected to the circuit board of the camera driving motor through the second conductive lead; and
a ground lead, wherein the first spring arm is electrically connected to the circuit board of the camera driving motor through the ground lead.

19. The camera driving motor according to claim 17 or 18, wherein the electrical connection structure comprises:
a second spring arm, wherein a part of the second spring arm is electrically connected to the variable aperture;
a first conductive lead; and
a flexible printed circuit, wherein the flexible printed circuit is configured to electrically connect to the circuit board of the camera driving motor, and the other part of the second spring arm is electrically connected to the flexible printed circuit through the first conductive lead; and
the focusing driving structure is electrically connected to the flexible printed circuit through the first conductive lead.

20. The camera driving motor according to any one of claims 1 to 19, wherein the seat body comprises:
a main body portion and an extension portion, wherein
the extension portion is disposed on a side that is of the main body portion and that is close to the base, and the extension portion extends along a circumferential direction of an outer edge of the main body portion in a direction away from the main body portion;
the accommodating cavity runs through the main body portion and the extension portion; and
there is a gap between the extension portion and the base, and the plurality of balls are disposed in the gap.

21. A camera driving motor, comprising:
a base;
a seat body, located on the base, wherein the seat body has an accommodating cavity;
a carrier, located in the accommodating cavity, wherein the carrier is configured to mount a lens;
an elastic member, wherein the elastic member is configured to provide an elastic force for the carrier and the lens to move from a first position to a second position, wherein a direction from the first position to the second position is parallel to an optical axis of the lens, and the first position is closer to the seat body than the second position;
a focusing driving structure, configured to drive the carrier and the lens to move between the second position and a third position along the optical axis of the lens, wherein the second position is located between the first position and the third position; and
a slide bar, wherein an axial direction of the slide bar is parallel to an optical axis direction of the lens, and the slide bar is disposed between the seat body and the carrier; and
when the carrier and the lens move between the first position and the third position, the carrier slides along the axial direction of the slide bar.

22. The camera driving motor according to claim 21, wherein when the elastic member is located below the seat body, and the carrier and the lens are located at the first position, the carrier is in contact with the elastic member, and the elastic member deforms to generate an elastic force pointing from the first position to the second position.

23. The camera driving motor according to claim 22, wherein when the carrier and the lens move between the second position and the third position, the carrier is separated from the elastic member.

24. The camera driving motor according to any one of claims 21 to 23, wherein the elastic member comprises a first lug and a second lug, and an elastic segment that is connected between the first lug and the second lug, wherein both the first lug and the second lug are fastened on the seat body, and the elastic segment extends to a position below the carrier; and
when the carrier and the lens are located at the first position, the carrier is in contact with the elastic segment, and the elastic segment deforms to generate an elastic force pointing from the first position to the second position.

25. The camera driving motor according to any one of claims 21 to 24, wherein the camera driving motor further comprises:
an attraction structure, configured to generate an attraction force with the slide bar; and
when the carrier and the lens move along the optical axis of the lens, the carrier slides along the axial direction of the slide bar under attraction of the attraction force.

26. The camera driving motor according to claim 25, wherein the attraction structure comprises:
a magnet, wherein the magnet is fastened on the carrier and disposed close to the slide bar, and the attraction force is generated between the magnet and the slide bar.

27. The camera driving motor according to any one of claims 21 to 26, wherein the focusing driving structure comprises a magnet and a coil opposite to the magnet, wherein one of the magnet and the coil is disposed on the carrier, and the other is disposed on the seat body; and
the camera driving motor further comprises:
a position detection structure, wherein the position detection structure is configured to detect a position at which the carrier slides relative to the slide bar; and
the position detection structure comprises an electromagnetic transducer and a magnet, and the magnet in the position detection structure is shared with the magnet in the focusing driving structure.

28. A camera module, comprising:
the camera driving motor according to any one of claims 1 to 27; and
a lens, wherein the lens is mounted on the carrier.

29. An electronic device, comprising:
the camera module according to claim 28; and
a computing controller, wherein the computing controller is electrically connected to the camera module.
